(19) Europäisches Patentamt / European Patent Office / Office européen des brevets

(11) **EP 2 565 215 B1**

(12) **EUROPEAN PATENT SPECIFICATION**

(45) Date of publication and mention
of the grant of the patent:
**11.02.2015 Bulletin 2015/07**

(51) Int Cl.:
***C08G 65/28*** (2006.01)      ***C08F 283/06*** (2006.01)
***C08G 18/48*** (2006.01)      ***C08G 65/10*** (2006.01)

(21) Application number: **11775148.7**

(22) Date of filing: **28.04.2011**

(86) International application number:
**PCT/JP2011/060454**

(87) International publication number:
**WO 2011/136367 (03.11.2011 Gazette 2011/44)**

(54) **POLYOXYALKYLENE POLYOL, POLYOL IN WHICH POLYMER IS DISPERSED, FLEXIBLE POLYURETHANE FOAM, AND PROCESSES FOR PRODUCTION OF SAME**

POLYOXYALKYLENPOLYOL, POLYOL MIT EINEM DARIN DISPERGIERTEN POLYMER, FLEXIBLER POLYURETHANSCHAUMSTOFF UND HERSTELLUNGSVERFAHREN DAFÜR

POLYOXYALKYLÈNE-POLYOL, POLYOL DANS LEQUEL UN POLYMÈRE EST DISPERSÉ, MOUSSE DE POLYURÉTHANE FLEXIBLE, ET PROCÉDÉS POUR LA PRODUCTION DE CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2010 JP 2010105166**

(43) Date of publication of application:
**06.03.2013 Bulletin 2013/10**

(73) Proprietor: **Asahi Glass Company, Limited
Tokyo 100-8405 (JP)**

(72) Inventors:
• **SASAKI, Takayuki
Tokyo 100-8405 (JP)**
• **KUMAGAI, Naohiro
Tokyo 100-8405 (JP)**
• **ITO, Takashi
Tokyo 100-8405 (JP)**
• **HARADA, Hisakazu
Tokyo 100-8405 (JP)**

• **HORIE, Akio
Tokyo 100-8405 (JP)**
• **SUZUKI, Chitoshi
Tokyo 100-8405 (JP)**
• **ARAI, Takeaki
Tokyo 100-8405 (JP)**
• **FURUMI, Masahito
Tokyo 100-8405 (JP)**

(74) Representative: **Blodig, Wolfgang
Wächtershäuser & Hartz
Patentanwaltspartnerschaft mbB
Weinstrasse 8
80333 München (DE)**

(56) References cited:
**EP-A1- 1 884 529        WO-A1-2006/115169
JP-A- 3 014 812          JP-A- 7 278 289
JP-A- 10 279 655         JP-A- 2002 543 228
JP-A- 2004 269 849       JP-A- 2007 204 680
US-A1- 2006 004 233**

**Description**

TECHNICAL FIELD

The present invention relates to a polyoxyalkylene polyol and its production process, a polymer-dispersed polyol using the polyoxyalkylene polyol and its production process, and a flexible polyurethane foam using the polyoxyalkylene polyol and/or the polymer-dispersed polyol, and its production process.

BACKGROUND ART

A flexible polyurethane foam (hereinafter, sometimes referred to simply as a flexible foam) can be produced by reacting a polyol and a polyisocyanate compound in the presence of a urethane-forming catalyst, a foam stabilizer and a blowing agent.

A flexible foam is used, for example, as a material for e.g. a seat member (a seat cushion or a seat back rest).

Especially for a seat member for automobiles, it is an important object to achieve weight saving of the seat member by density reduction or thickness reduction of a flexible foam while suppressing the deterioration of physical properties of the flexible foam.

For example, a polyoxyalkylene polyol to be used as a material for a flexible foam is produced by subjecting an alkylene oxide such as propylene oxide (hereinafter, sometimes referred to as PO) to ring-opening addition polymerization to an initiator such as a polyhydric alcohol by using a catalyst made of a hydroxide of an alkali metal such as sodium hydroxide or potassium hydroxide (hereinafter, sometimes referred to as an alkali catalyst).

Further, it has been widely conducted to change the terminal hydroxy groups to primary hydroxy groups, by subjecting PO to ring-opening addition polymerization to an initiator, and then subjecting ethylene oxide (hereinafter, sometimes referred to as EO) to ring-opening addition polymerization thereto to form an oxyethylene block at the terminals. The reactivity of the primary hydroxy groups is higher than secondary hydroxyl groups, and therefore by increasing the proportion of the primary hydroxy groups (primary hydroxylation rate) among the terminal hydroxy groups, it is possible to improve the curing property when a flexible foam is produced.

However, in the process for producing a polyoxyalkylene polyol by using an alkali catalyst, a monool having an unsaturated bond tends to form as a by-product, and therefore the degree of total unsaturation of the polyol obtainable will be high. In the case of such a polyol having a high degree of total unsaturation, the strength or the durability is likely to deteriorate. Further, if the density of the flexible foam is reduced, the resin strength is likely to be insufficient, and the hardness is likely to deteriorate.

Accordingly, Patent Documents 1 and 2 propose a process for producing a polyoxyalkylene polyol having a low degree of total unsaturation, by using a double metal cyanide complex catalyst (hereinafter, sometimes referred to as a DMC catalyst).

Further, in the process disclosed in each of Patent Documents 1 and 2, PO is subjected to ring-opening addition polymerization to an initiator by using a DMC catalyst, and then EO is subjected to ring-opening addition polymerization (EO cap) by using an alkali catalyst so as to change the terminal hydroxy groups to primary hydroxy groups.

However, in such a process, the curing property in production of a flexible foam or the wet heat durability of the resulting flexible foam tends to be insufficient because of poor efficiency of the primary hydroxylation of the terminal hydroxy groups to the addition amount of EO, from the following reasons.

That is, in the ring-opening addition polymerization of PO using a DMC catalyst, cleavages are mostly $\beta$-cleavages which are a cleavage of a C-O bond to which no methyl group of PO is bonded, but some of the cleavages are $\alpha$-cleavage which are a cleavage of a C-O bond to which a methyl group is bonded. By the $\alpha$-cleavage, a structure having a methyl group as the side chain bonded to two carbon atoms adjacent to each other via an ether bond is formed, and when this is present at the terminal, a primary hydroxy group is formed. On the other hand, by the $\beta$-cleavage, a structure (head-to-tail bond) having an ether bond and a methylene group interposed between two carbon atoms to which a methyl group as the side chain is bonded, and when this is present at the terminal, a secondary hydroxy group is formed. The proportion of the head-to-tail bond to be formed (hereinafter, referred to as "H-T bond selectivity") is usually approximately from 90 to 94%.

Accordingly, in a polyol obtainable by subjecting PO to ring-opening addition polymerization to an initiator by using a DMC catalyst, i.e. in an intermediate polyol immediately before conducting EO cap, approximately from 90 to 94% of the terminal hydroxy groups are secondary hydroxy groups, and the remaining approximately from 10 to 6% are primary hydroxy groups. Thus, when EO is subjected to ring-opening addition polymerization to the intermediate polyol having primary hydroxy groups and secondary hydroxy groups mixed at the terminals by using an alkali catalyst, the supplied EO is readily added to the primary hydroxy groups rather than the secondary hydroxy groups since the reactivity of the primary hydroxy groups is higher. When EO is added to the primary hydroxy groups, its terminals become primary hydroxy groups, and therefore further-supplied EO is readily added to the primary hydroxy groups at the EO terminal rather than the secondary hydroxy groups.

Thus, EO cannot uniformly be added to the intermediate polyol having primary hydroxy groups and secondary hydroxy groups mixed, and the larger the amount of the primary hydroxy groups at the terminal becomes, the larger the addition amount of EO required to obtain a prescribed primary hydroxylation rate becomes. In other words, the lower the H-T bond selectivity is, the worse the efficiency of the primary hydroxylation of the terminal hydroxy groups to the addition amount of EO becomes.

On the other hand, a polyol obtainable by subjecting PO to ring-opening addition polymerization to an initiator by using an alkali metal catalyst, has a H-T bond selectivity at the terminal being almost 100%. When EO cap is conducted to such a polyol, it is possible to obtain a prescribed primary hydroxylation rate of the terminal hydroxy groups with a small addition amount of EO. However, if an alkali metal catalyst is used, the degree of total unsaturation tends to be high, and it is thereby impossible to produce a desired polyoxyalkylene polyol having a low degree of total unsaturation.

To begin with, the hydrophilicity of EO is higher than PO, and therefore the larger the addition amount of EO becomes, the lower the wet heat durability of the flexible foam becomes. On the other hand, the smaller the addition amount of EO becomes, the lower the primary hydroxylation rate of the terminal hydroxy groups becomes, whereby the curing property deteriorates.

Patent Documents 3 and 4 disclose a process for producing a polyol having at least 96% of H-T bond selectivity by using, as a catalyst, a phosphazenium compound, but as compared with the case of using a DMC catalyst, it is necessary to use a large amount of the catalyst, and therefore it is economically disadvantageous.

Patent Document 5 discloses a process for producing a polyol having primary hydroxy groups derived from oxetane at the terminals by subjecting oxetane and propylene oxide to ring-opening addition polymerization to an initiator in the presence of a DMC catalyst.

Patent Document 6 discloses a process for producing a polyol having a high primary hydroxylation rate of the terminal hydroxy groups by reacting a mixture of ethylene oxide and trimethylene oxide (oxetane) to an initiator in the presence of a DMC catalyst.

However, oxetane is relatively expensive since the supply amount is limited, and therefore it is economically disadvantageous.

PRIOR ART DOCUMENTS

PATENT DOCUMENTS

Patent Document 1:  Japanese Patent No. 2,616,054
Patent Document 2:  Japanese Patent No. 2,616,055
Patent Document 3:  JP-A-11-106500
Patent Document 4:  JP-A-2000-230027
Patent Document 5:  Japanese Patent No. 4,273,876
Patent Document 6:  JP-A-4-300920

DISCLOSURE OF INVENTION

TECHNICAL PROBLEM

According to the process disclosed in each of Patent Document 1 and Patent Document 2, it is possible to produce a polyoxyalkylene polyol having a low degree of total unsaturation by using a DMC catalyst, and therefore by using this, it is possible to improve the strength and the durability of a flexible foam or the decrease of hardness along with the density reduction. However, as mentioned above, since the efficiency of primary hydroxylation of the terminal hydroxy groups to the addition amount of EO is poor, it is difficult to achieve both of the curing property and the wet heat durability of the flexible foam at the same time.

Under these circumstances, the present invention provides a process for producing a polyoxyalkylene polyol, capable of producing a polyoxyalkylene polyol having a high primary hydroxylation rate of the terminal hydroxy groups, in spite of a low degree of total unsaturation and a low content of oxyethylene groups, and a polyoxyalkylene polyol obtainable by the process.

Further, the present invention provides a process for producing a polymer-dispersed polyol having a high primary hydroxylation rate of the terminal hydroxy groups, in spite of a low degree of total unsaturation of a base polyol and a low content of oxyethylene groups, and a polymer-dispersed polyol obtainable by the process.

Further, the present invention provides a process for producing a flexible polyurethane foam, capable of obtaining a flexible foam having good strength and durability, good curing property, and good physical properties, while achieving the density reduction and/or the thickness reduction of the flexible foam, and a flexible polyurethane foam obtainable by the process.

SOLUTION TO PROBLEM

The present invention provides the following.

[1] A process for producing a polyoxyalkylene polyol, which comprises:

a first polymerization step of subjecting propylene oxide or a mixture of propylene oxide and ethylene oxide to ring-opening addition polymerization to an initiator in the presence of a double metal cyanide complex catalyst (a1) to obtain a first intermediate polyol;
a second polymerization step of subjecting, after the first polymerization step, propylene oxide to ring-opening addition polymerization in the presence of a polymerization catalyst (a2) made of an alkali metal hydroxide and/or an alkali metal alcoholate compound to obtain a second intermediate polyol; and
a third polymerization step of subjecting, after the second polymerization step, ethylene oxide to ring-opening addition polymerization in the presence of a polymerization catalyst (a2) made of an alkali metal hydroxide or an alkali metal alcoholate compound to obtain a polyoxyalkylene polyol (A1).

[2] The process for producing a polyoxyalkylene polyol according to the above [1], wherein the content of oxyethylene groups in the polyoxyalkylene polyol (A1) is from 5 to 25 mass%.
[3] The process for producing a polyoxyalkylene polyol according to the above [1] or [2], wherein the addition amount of propylene oxide in the second polymerization step is from 0.28 to 3.00 mol per 1 mol of functional groups of the initiator.
[4] The process for producing a polyoxyalkylene polyol according to any one of the above [1] to [3], wherein, after the second polymerization step, the proportion of primary hydroxy groups among the terminal hydroxy groups is at least 4%.
[5] The process for producing a polyoxyalkylene polyol according to any one of the above [1] to [4], wherein the degree of total unsaturation of the polyoxyalkylene polyol (A1) is at most 0.05 meq/g.
[6] The process for producing a polyoxyalkylene polyol according to any one of the above [1] to [5], wherein the average number of functional groups of the initiator is from 2 to 6, and the polymerizations are carried out so that the hydroxy value of the polyoxyalkylene polyol (A1) is from 5 to 56 mgKOH/g.
[7] A polyoxyalkylene polyol (A1) obtainable by the production process as defined in any one of the above [1] to [6].
[8] A process for producing a polymer-dispersed polyol (A1'), which comprises a fourth step of polymerizing a monomer having an ethylenically unsaturated double bond in the polyoxyalkylene polyol (A1) as defined in the above [7], as a base polyol.
[9] A polymer-dispersed polyol (A1') obtainable by the production process as defined in the above [8].
[10] A process for producing a flexible polyurethane foam, which comprises a foaming step of reacting a polyol (A) with a polyisocyanate compound (B), in the presence of a catalyst (C), a blowing agent (D) and a foam stabilizer (E), wherein the polyol (A) contains the polyoxyalkylene polyol (A1) as defined in Claim 7 and/or the polymer-dispersed polyol (A1') as defined in Claim 9, in an amount of from 10 to 100 mass% per 100 mass% of the polyol (A).
[11] The process for producing a flexible polyurethane foam according to the above [10], wherein the polyol (A) contains a polymer-dispersed polyol (A2) other than the polymer-dispersed polyol (A1'), in an amount of from 10 to 90 mass% per 100 mass% of the polyol (A).
[12] The process for producing a flexible polyurethane foam according to the above [10] or [11], wherein the blowing agent (D) is water only.
[13] The process for producing a flexible polyurethane foam according to any one of the above [10] to [12], wherein a crosslinking agent (F) is further present in the foaming step.
[14] The process for producing a flexible polyurethane foam according to any one of the above [10] to [13], wherein the amount of the polyisocyanate compound (B) used is such an amount that the isocyanate index is from 70 to 125.
[15] A flexible polyurethane foam obtainable by the production process as defined in any one of the above [10] to [14], which has a core density of from 20 to 100 kg/m$^3$.
[16] A seat member for automobiles, using the flexible polyurethane foam as defined in the above [15].

ADVANTAGEOUS EFFECTS OF INVENTION

According to the process for producing a polyoxyalkylene polyol of the present invention, it is possible to produce a polyoxyalkylene polyol having a high primary hydroxylation rate of the terminal hydroxy groups, in spite of a low degree of total unsaturation and a low content of oxyethylene groups. A flexible polyurethane foam is produced by using such a polyoxyalkylene polyol, whereby a flexible foam having good strength and durability can be obtained. The curing property in the production of the flexible foam also becomes good. Further, the reduction of hardness along with the density reduction of the flexible foam can be suppressed, and therefore it is possible to obtain a flexible foam having good physical properties while achieving the density reduction and/or thickness reduction of the flexible foam.

According to the process for producing a polymer-dispersed polyol of the present invention, it is possible to produce a polymer-dispersed polyol having a high primary hydroxylation rate of the terminal hydroxy groups, in spite of a low degree of total unsaturation of a base polyol and a low content of oxyethylene groups. By using such a polymer-dispersed polyol for producing a flexible polyurethane foam, the strength, the durability and the curing property of the flexible foam become good, and the hardness, the airflow and other physical properties can also be improved. Further, the reduction of hardness along with the density reduction of the flexible foam can be suppressed, and therefore it is possible to produce a flexible foam having good physical properties while achieving the density reduction and/or thickness reduction of the flexible foam.

According to the process for producing a flexible polyurethane foam of the present invention, a flexible foam having good strength and durability can be obtained, and curing property in the production of the flexible foam also becomes good. Further, the reduction of hardness along with the density reduction of the flexible foam can be suppressed, and therefore it is possible to produce a flexible foam having good physical properties while achieving the density reduction and/or thickness reduction of the flexible foam.

The flexible polyurethane foam of the present invention is suitable for a seat member for automobiles, and it is possible to achieve weight saving by the density reduction and/or the thickness reduction.

DESCRIPTION OF EMBODIMENTS

In this specification, "a polyol system solution" is a solution to be reacted with a polyisocyanate compound, and is a solution containing compounding ingredients as the case requires, such as a blowing agent, a foam stabilizer, a catalyst, a flame retardant, in addition to a polyol.

In this specification, "a foam stock solution composition" is a solution obtained by mixing a polyol system solution, a polyisocyanate compound and optional remaining components.

In this specification, the hydroxy value of a polyol is a value measured in accordance with JIS K1557 (2007 edition).

In this specification, the hydroxy value of a polymer-dispersed polyol is a value calculated from the mass change as between before and after the polymerization of the monomer, in accordance with the following formula (1):

$$\text{Hydroxy value} = \text{(hydroxy value of base polyol)} \times \text{(mass of base polyol charged)} / \text{(mass of polymer-dispersed polyol obtained)} \qquad (1)$$

In this specification, the degree of total unsaturation of a polyoxyalkylene polyol is a value measured in accordance with JIS K1557 (2007 edition).

In this specification, the proportion of oxyethylene groups in a polyoxyalkylene polyol is a value calculated from the amount charged in the production of a polyol.

In this specification, the number average molecular weight (Mn) and the mass average molecular weight (Mw) are molecular weights as calculated as polystyrene, measured by using a commercially-available gel permeation chromatography (GPC) measuring device.

In this specification, "the molecular weight distribution" is a ratio (Mw/Mn) of the mass average molecular weight (Mw) to the number average molecular weight (Mn).

In this specification, the functional group is a group having an active hydrogen, and the average number of functional groups is an average number of groups having active hydrogens in one molecule of a compound containing active hydrogen groups.

<Polyoxyalkylene polyol (A1)>

The polyoxyalkylene polyol (A1) (hereinafter, referred to as polyol (A1)) of the present invention is a polyoxyalkylene polyol obtainable via a first polymerization step of subjecting PO and/or a mixture of PO and EO to ring-opening addition polymerization to an initiator in the presence of a DMC catalyst (a1) to obtain a first intermediate polyol; a second polymerization step of subjecting PO to ring-opening addition polymerization to the above first intermediate polyol in the presence of a polymerization catalyst (a2) made of an alkali metal hydroxide and/or an alkali metal alcoholate compound to obtain a second intermediate polyol; and a third polymerization step of subjecting EO to ring-opening addition polymerization to the above second intermediate polyol in the presence of the polymerization catalyst (a2).

The polymerization catalyst (a2) to be used in the second polymerization step and the polymerization catalyst (a2) to be used in the third polymerization step may be the same or different, but they are preferably the same since the operation becomes simple.

In the first polymerization step, the order of ring-opening addition polymerization of PO or the mixture of PO and EO to the initiator is not particularly limited, but the polymerization is preferably carried out in accordance with any one of the following methods (I) to (III). (I) A method of subjecting only PO to ring-opening addition polymerization to the initiator. (II) A method of subjecting PO to ring-opening addition polymerization to the initiator, and then subjecting the mixture of PO and EO to ring-opening addition polymerization thereto. (III) A method of subjecting the mixture of PO and EO to ring-opening addition polymerization to the initiator.

In the present invention, no more ring-opening addition polymerization of an alkylene oxide is carried out after the third polymerization step. Accordingly, in a case where the above method (I) is employed in the first polymerization step, the resulting polyol (A1) has a structure (Ia) in which a block chain (in this specification, sometimes referred to as "PO block chain") comprising oxypropylene groups is added to the initiator, and a block chain (in this specification, sometimes referred to as "terminal oxyethylene chain") comprising at least one oxyethylene group is added to the terminal.

In a case where the above method (II) is employed in the first polymerization step, the resulting polyol (A1) has a structure (IIa) in which a block chain (PO block chain) comprising oxypropylene groups is added to the initiator, then a random chain (in this specification, sometimes referred to as "PO/EO random chain") comprising oxypropylene groups/oxyethylene groups is added thereto, then a block chain (PO block chain) comprising oxypropylene groups is added thereto, and then a block chain (in this specification, sometimes referred to as "terminal oxyethylene chain") comprising at least one oxyethylene group is added to the terminal.

In a case where the above method (III) is employed in the first polymerization step, the resulting polyol (A1) has a structure (IIIa) in which a random chain (PO/EO random chain) comprising oxypropylene groups/oxyethylene groups is added to the initiator, then a block chain (PO block chain) comprising oxypropylene groups is added thereto, and then a block chain (terminal oxyethylene chain) comprising at least one oxyethylene group is added to the terminal.

(Initiator)

As the initiator for the polyol (A1), a polyhydroxy compound is used. The average number of functional groups of the initiator is preferably from 2 to 6, more preferably from 2 to 4.

The initiator may, for example, be specifically water, ethylene glycol, diethylene glycol, propylene glycol, dipropylene glycol, neopentyl glycol, 1,4-butanediol, 1,6-hexanediol, glycerol, trimethylolpropane, pentaerythritol, diglycerol, dextrose, bisphenol A, or a polyoxyalkylene polyol having a low-molecular weight (for example, a molecular weight of from 700 to 3,000) obtainable by adding an alkylene oxide thereto.
Preferred is propylene glycol, glycerol, pentaerythritol or a low-molecular weight polyoxyalkylene polyol obtainable by subjecting an alkylene oxide (preferably PO) to ring-opening addition polymerization thereto.

(Double metal cyanide complex catalyst (a1))

The DMC complex catalyst (a1) to be used in the present invention is a DMC catalyst having an organic ligand, and may be produced by a known process. It may be produced, for example, by a process as disclosed in e.g. JP-A-2003-165836, JP-A-2005-15786, JP-A-7-196778 or JP-A-2000-513647.

Specifically, it may be produced by (a) a process of coordinating an organic ligand to a reaction product obtainable by reacting a halogenated metal salt with an alkali metal cyanometalate in an aqueous solution, then separating the solid component, and further washing the separated solid component with an organic ligand aqueous solution, (b) a process of reacting a halogenated metal salt with an alkali metal cyanometalate in an organic ligand aqueous solution, separating the obtained reaction product (solid component) and further washing the separated solid component with an organic ligand aqueous solution, or the like.

In the method (a) or (b), a cake (solid component) obtained by washing the reaction product, followed by separation by filtration may be re-dispersed in an organic ligand aqueous solution containing a polyether compound in an amount of at most 3 mass% based on the cake, and then volatile components are distilled off to prepare a slurry-form DMC complex catalyst. To produce a highly active polyol having a narrow molecular weight distribution by using the DMC catalyst, it is particularly preferred to use such a slurry-form DMC catalyst.

The polyether compound to be used to prepare the slurry-form catalyst is preferably a polyether polyol or a polyether monool. Specifically, it is preferably a polyoxyalkylene monool or a polyoxyalkylene polyol, each having an average of from 1 to 12 preferably from 2 to 8 functional groups, per molecule and a mass average molecular weight of from 300 to 5,000, preferably from 700 to 3,000, produced by subjecting an alkylene oxide to ring-opening addition polymerization to an initiator selected from a monoalcohol and a polyhydric alcohol by using an alkali catalyst or a cationic catalyst.

The DMC catalyst is preferably a zinc hexacyanocobaltate complex. As the organic ligand in the DMC catalyst, an alcohol, an ether, a ketone, an ester, an amine, an amide or the like may be used.

A preferred organic ligand may be tert-butyl alcohol, n-butyl alcohol, iso-butyl alcohol, tert-pentyl alcohol, iso-pentyl alcohol, N,N-dimethylacetamide, ethylene glycol mono-tert-butyl ether, ethylene glycol dimethyl ether (also called glyme), diethylene glycol dimethyl ether (also called diglyme), triethylene glycol dimethyl ether (also called triglyme), iso-propyl alcohol or dioxane. Dioxane may be 1,4-dioxane or 1,3-dioxane but is preferably 1,4-dioxane. The organic ligands may be used alone or in combination of two or more.

Among them, the catalyst preferably has tert-butyl alcohol as the organic ligand. Accordingly, it is preferred to use a DMC catalyst having tert-butyl alcohol as at least part of the organic ligand. With the DMC catalyst having such an organic ligand, which has high activity, a polyol with a low degree of total unsaturation can be produced. Further, in a case where a highly active DMC catalyst is used, it is possible to reduce the amount of its use, and therefore it is preferred for reducing the amount of the remaining catalyst.

(Polymerization catalyst (a2))

The polymerization catalyst (a2) comprises an alkali metal hydroxide and/or an alkali metal alcoholate compound. The alkali metal hydroxide may, for example, be sodium hydroxide (NaOH), potassium hydroxide (KOH) or cesium hydroxide (CsOH). Further, the alkali metal alcoholate compound may, for example, be sodium methoxide ($CH_3ONa$), potassium methoxide ($CH_3OK$), sodium ethoxide ($C_2H_5ONa$) or potassium ethoxide ($C_2H_5OK$). Among them, sodium hydroxide or potassium hydroxide is preferred since it is inexpensive.

[Process for producing polyol (A1)]

(First polymerization step)

First, PO and/or a mixture of PO and EO is subjected to ring-opening addition polymerization to an initiator in the presence of the DMC catalyst (a1) to obtain a first intermediate polyol (first polymerization step).

In the case of the above method (I), PO alone is subjected to ring-opening addition polymerization to an initiator. In the case of the above method (II), PO is subjected to ring-opening addition polymerization to an initiator, and then a mixture of PO and EO is subjected to ring-opening addition polymerization thereto. In the case of the above method (III), a mixture of PO and EO is subjected to ring-opening addition polymerization to an initiator.

The first polymerization step may be carried out by a known method. For example, it is preferred to carry out by the following methods. First, an initiator and a DMC catalyst are mixed and heated to a prescribed reaction temperature in a pressure resistant reactor, and a part of PO is supplied thereto and reacted therewith thereby to initially activate the DMC catalyst. Thereafter, in the case of the above (I), remaining PO is supplied thereto and reacted therewith while stirring at a prescribed reaction temperature to obtain the first intermediate polyol. In the case of the above method (II), prescribed PO is reacted therewith, and further a mixture of EO and remaining PO is reacted therewith to obtain the first intermediate polyol. In the case of the above method (III), a mixture of EO and remaining PO is reacted to obtain the first intermediate polyol.

With respect to the mixture of PO and EO to be used in the above method (II) or (III), the mixing ratio of PO and EO is preferably from 70:30 to 95:5 as a mass ratio (PO:EO) although it depends on a molecular weight of a desired polyol (A1). The mass ratio is more preferably from 80:20 to 90:10 from the viewpoint of lowering the EO content.

The reaction temperature for ring-opening addition polymerization is preferably from 90 to 150°C, more preferably from 100 to 140°C.

As the case requires, the polymerization solvent may be used. The polymerization solvent may, for example, be hexane, cyclohexane, benzene or ethyl methyl ketone.

In the first polymerization step, the amount of PO or the amount of PO and EO to be subjected to ring-opening addition polymerization to an initiator, may be determined depending upon the molecular weight of the polyol (A1) to be obtained.

The first polymerization step may be either a batch method or a continuous method.

(Second polymerization step)

After completion of the reaction of PO and/or the mixture of PO and EO, supplied in the first polymerization step, the reaction solution is cooled to a prescribed dehydration temperature, and the polymerization catalyst (a2) is charged therein. Here, before the polymerization catalyst (a2) is charged, removal and deactivation of the DMC catalyst may be carried out, as the case requires. In a case where the polymerization catalyst (a2) is made of an alkali metal hydroxide, dehydration is carried out by keeping it at a temperature of from 90 to 150°C for from 1 to 12 hours to carry out alcoholation of the alkali metal. Especially, in the case of an aqueous alkali metal hydroxide solution, dehydration under reduced pressure is carried out for from 1 to 12 hours to adjust the water content to be at most 200 ppm (mass ppm), whereby at the time of subjecting EO to ring-opening addition polymerization in the third polymerization step, water and EO are reacted to suppress production of polyethylene glycol, whereby it is possible to stably produce a flexible foam. Especially, with a view to obtaining a polyol having no turbidity for one month or more even at a temperature of at most 20°C, it is most preferred that the water content is adjusted to be at most 100 ppm. Also in a case where the polymerization catalyst (a2) is made of an alkali metal alcoholate compound, alcoholation may be carried out under the same conditions as in the alkali metal hydroxide.

Then, while keeping a prescribed reaction temperature, PO is supplied thereto and reacted therewith with stirring to obtain a second intermediate polyol. The reaction temperature is preferably from 90 to 150°C, more preferably from 95 to 140°C.

In the second polymerization step, the amount of PO to be subjected to ring-opening addition polymerization to the first intermediate polyol, is at least an amount required for changing at least some of the primary hydroxy groups present at the terminals of the first intermediate polyol to secondary hydroxy groups by PO cap, and it is preferably at least 0.28 mol per 1 mol of functional groups of the initiator used in the first polymerization step.

Especially, as the amount of the primary hydroxy groups remaining at the terminals after the second polymerization step becomes small, the efficiency of the primary hydroxylation to the addition amount of EO in the third polymerization step improves. In order to achieve the improvement, the amount of PO to be subjected to ring-opening addition polymerization in the second polymerization step is preferably at least 0.28 mol, more preferably at least 0.50 mol, particularly preferably at least 0.80 mol, per 1 mol of the functional groups in the initiator used in the first polymerization step.

In a case where the polyol (A1) has a structure (Ia) in which a PO block chain is added to the initiator and a terminal EO chain is added thereto, the amount of PO to be subjected to ring-opening addition polymerization in the second polymerization step is preferably at least 0.28 mol, more preferably at least 0.33 mol, per 1 mol of the functional groups of the initiator used in the first polymerization step.

Especially, as the amount of the primary hydroxy group remaining at the terminals after the second polymerization step becomes small, the efficiency of the primary hydroxylation to the addition amount of EO in the third polymerization step improves. The proportion of the primary hydroxy groups remaining at the terminals after the second polymerization step is preferably at most 4%, more preferably at most 3%. In order to achieve the improvement, the amount of PO to be subjected to ring-opening addition polymerization in the second polymerization step is more preferably at least 0.5 mol, particularly preferably at least 0.80 mol per 1 mol of the functional groups in the initiator used in the first polymerization step.

In a case where the polyol (A1) has a structure (IIa) in which a PO block chain is added to the initiator and a PO/EO random chain is added thereto, or in a case where the polyol (A1) has a structure (IIIa) in which a PO/EO random chain is added to the initiator, the amount of PO to be subjected to ring-opening addition polymerization in the second polymerization step is preferably at least 0.30 mol, more preferably at least 0.35 mol, per 1 mol of the functional groups in the initiator used in the first polymerization step.

Especially, as the amount of the primary hydroxy group remaining at the terminals after the second polymerization step becomes small, the efficiency of the primary hydroxylation to the addition amount of EO in the third polymerization step improves. In order to achieve the improvement, the amount of PO to be subjected to ring-opening addition polymerization in the second polymerization step is more preferably at least 0.50 mol, particularly preferably at least 0.80 mol, per 1 mol of the functional groups in the initiator used in the first polymerization step.

On the other hand, as the amount of PO to be subjected to ring-opening addition polymerization by using the polymerization catalyst (a2) increases, the degree of total unsaturation of the polyol (A1) increases. In order to suppress deterioration of the physical properties of the flexible foam due to the increase of the degree of total unsaturation, the amount of PO to be subjected to ring-opening addition polymerization in the second polymerization step is preferably at most 3.00 mol, more preferably at most 2.00 mol, further more preferably at most 1.50 mol, per 1 mol of the functional groups of the initiator used in the first polymerization step.

The amount of the polymerization catalyst (a2) to be supplied in the second polymerization step is not restricted so long as it is an amount required for the ring-opening addition polymerization of PO in the second polymerization step and the ring-opening addition polymerization of EO in the third polymerization step, but is preferably as small as possible.

(Third polymerization step)

After completion of the reaction of PO supplied in the second polymerization step, EO is supplied thereto and reacted therewith with stirring at a prescribed reaction temperature to obtain the polyol (A1). The reaction temperature is preferably from 30 to 160°C, more preferably from 50 to 130°C.

In the third polymerization step, the amount of EO to be subjected to ring-opening addition polymerization to the second intermediate polyol, is determined depending on the primary hydroxylation rate in the polyol (A1) to be obtained. The amount of EO also changes depending on the amount of primary hydroxy groups remaining at the terminals of the second intermediate polyol.

For example, when the primary hydroxylation rate of the terminal hydroxy groups of the polyol (A1) to be obtained is from 85 to 98% and the amount of PO to be subjected to ring-opening addition polymerization in the second polymerization step is from 0.28 to 1.05 mol per 1 mol of the functional group in the initiator used in the first polymerization step, the amount of EO to be subjected to ring-opening addition polymerization in the third polymerization step is preferably from 5.00 to 9.5 mol, more preferably from 5.00 to 8.00, per 1 mol of the functional groups of the initiator.

Methods for the removal and the deactivation of the DMC catalyst may be an adsorption method using an adsorbent selected from synthetic silicate (such as magnesium silicate or aluminium silicate), an ion exchange resin and activated clay, or a neutralization method by an amine, an alkali metal hydroxide, phosphoric acid, an organic acid such as lactic acid, succinic acid, adipic acid or acetic acid, or its salt, or an inorganic acid such as sulfuric acid, nitric acid or hydrochloric acid. A combination of the neutralization method and the adsorption method may be employed. Further, the removal of the DMC catalyst may be applied to the second intermediate polyol obtained in the second polymerization step or the polyol (A1) obtained in the third polymerization step.

Further, to the polyol (A1) thus obtained, a stabilizer may be added as the case requires, thereby to prevent deterioration during long term storage. The stabilizer may, for example, be a hindered phenol type antioxidant such as BHT (dibutyl hydroxytoluene) or a hindered amine type antioxidant.

The average number of functional groups of the polyol (A1) is equal to the average number of functional groups of the initiator.

The average number of functional groups of the polyol (A1) is preferably from 2 to 6, more preferably from 2 to 4, furthermore preferably from 2.5 to 4. When the average number of functional groups is at least the lower limit of the above range, the durability, the repeated compression resistance, the mechanical strength, the moldability and the like of the flexible foam thus obtained, tend to be good. When the average number of functional groups is at most the upper limit of the above range, the flexible foam will not be too hard, whereby the physical properties of the flexible foam, such as elongation, tend to be good.

The hydroxy value of the polyol (A1) is preferably from 5 to 56 mgKOH/g, more preferably from 10 to 56 mgKOH/g, furthermore preferably from 12 to 50 mgKOH/g, particularly preferably from 14 to 45 mgKOH/g. When the hydroxy value is at least the lower limit of the above range, the viscosity of the polyol tends to be low, and therefore the flowability at the time of molding the flexible foam tends to be good. When the hydroxy value is at most the upper limit of the above range, the closed cell proportion of the flexible foam tends to decrease, and the moldability tends to be good.

The hydroxy value of the polyol (A1) is determined by the average number of functional groups of the initiator and the total amount of PO and EO to be polymerized in the first to third polymerization steps. In the present invention, it is preferably adjusted mainly by the total amount of PO and EO to be polymerized in the first polymerization step.

The degree of total unsaturation of the polyol (A1) is preferably at most 0.05 meq/g, more preferably at most 0.04 meq/g, furthermore preferably at most 0.03 meq/g. When the degree of total unsaturation is at most the upper limit of the above range, it is possible to obtain a flexible foam having good hardness and rebound resilience in spite of the low density.

It is possible to control the degree of total unsaturation of the polyol (A1) by adjusting the amount of PO to be subjected to ring-opening addition polymerization in the second polymerization step. The smaller the amount of PO becomes, the lower the degree of total unsaturation of the polyol (A1) becomes. When the amount of PO is at most 3.00 mol per 1 mol of the functional groups in the initiator used in the first polymerization step, it is possible to obtain the polyol (A1) having a degree of total unsaturation of at most 0.05 meq/g.

The primary hydroxylation rate of the terminal hydroxy groups of the polyol (A1) is preferably at least 80 mol%, more preferably at least 82 mol%. When the primary hydroxylation rate is at least 80 mol%, that is when the secondary hydroxy group is at most 20 mol% among the terminal hydroxy groups, the curing property in the production of the flexible foam becomes good, and the productivity improves. The primary hydroxylation rate of the terminal hydroxy groups may be 100 mol%, but from the viewpoint that the closed cell proportion would not be too high, the primary hydroxylation rate is preferably at most 98%, more preferably at most 95 mol%, particularly preferably from 82 to 90 mol%. The primary hydroxylation rate of the terminal hydroxy groups is an average value of the primary hydroxylation rate of all of the terminal hydroxy groups.

The primary hydroxylation rate of the terminal hydroxy groups in the polyol (A1) is influenced by the primary hydroxylation rate in the second intermediate polyol obtained in the second polymerization step, but it can be controlled by the amount of EO to be subjected to ring-opening addition polymerization mainly in the third polymerization step. The larger the amount of EO becomes, the higher the primary hydroxylation rate of the terminal hydroxy groups of the polyol (A1) becomes.

The content of oxyethylene groups in the polyol (A1) is preferably from 5 to 25 mass%. When the content is at least 5 mass%, it is possible to obtain an effect of improving the curing property by the increase of the primary hydroxylation rate of the terminal hydroxy groups in the polyol (A1). When the content is at most 25 mass%, it is possible to obtain good wet heat durability.

In a case where the polyol (A1) has a structure (Ia) in which a PO block chain is added to the initiator, and then a terminal oxyethylene chain is added thereto, the oxyethylene group content is preferably from 5 to 20 mass%, more preferably from 8 to 17 mass%.

In a case where the polyol (A1) has a structure (IIa) in which a PO block chain is added to the initiator, then a PO/EO random chain is added thereto, and then a terminal oxyethylene chain is added thereto, the oxyethylene group content is preferably from 5 to 23 mass%, more preferably from 7 to 17 mass%.

In a case where the polyol (A1) has a structure (IIIa) in which a PO/EO random chain is added to an initiator and then a terminal oxyethylene chain is added thereto, the oxyethylene group content is preferably from 5 to 25 mass%, more preferably from 7 to 20 mass%.

<Polymer-dispersed polyol (A1')>

The polymer-dispersed polyol (A1') is a polymer-dispersed polyol having the polyol (A1) as a base polyol.

The polymer-dispersed polyol is one having polymer particles dispersed in a base polyol, and by using it, it is possible to improve the hardness, the airflow and other physical properties of the flexible foam.

The polymer-dispersed polyol (A1') is obtainable by polymerizing monomers in the polyol (A1') as a base polyol to form polymer particles.

That is, the polymer-dispersed polyol (A1') is produced via the above first polymerization step, the above second polymerization step, the above third polymerization step, and the step (a fourth step) of polymerizing a monomer having an ethylenically unsaturated double bond in the polyol (A1) obtainable via the third polymerization step, as a base polyol, to form polymer particles.

As the monomer having an ethylenically unsaturated double bond, to be used for forming polymer particles, it is possible to use a known monomer.

A specific example of the monomer includes a cyano group-containing monomer such as acrylonitrile, methacrylonitrile or 2,4-dicyanobutene-1; a styrene type monomer such as styrene, $\alpha$-methyl styrene or halogenated styrene; an acryl type monomer such as acrylic acid, methacrylic acid or an alkyl ester thereof, acrylamide, or methacrylamide; a vinyl ester type monomer such as vinyl acetate or vinyl propionate; a diene type monomer such as isoprene or butadiene; an unsaturated fatty acid ester such as maleic acid diester or itaconic acid diester; a vinyl halide such as vinyl chloride, vinyl bromide or vinyl fluoride; a vinylidene halide such as vinylidene chloride, vinylidene bromide or vinylidene fluoride; a vinyl ether type monomer such as methyl vinyl ether, ethyl vinyl ether or isopropyl vinyl ether; and an olefin or halogenated olefin. Two or more of them may be used in combination.

Preferred is a combination of acrylonitrile and another monomer, and such another monomer is preferably styrene, an alkyl acrylate, an alkyl methacrylate or vinyl acetate. Two or more of such other monomers may be used in combination.

The proportion of the polymer particles contained in 100 mass% of the polymer-dispersed polyol (A1') is preferably from 5 to 60 mass%, more preferably from 10 to 50 mass%.

<Process for producing flexible polyurethane foam>

The process for producing a flexible polyurethane foam of the present invention comprises a foaming step of reacting a polyol (A), a polyisocyanate compound (B), a catalyst (C), a blowing agent (D), a foam stabilizer (E) and other components to be blended as the case requires.

<Polyol (A)>

The polyol (A) contains the polyol (A1) of the present invention and/or the polymer-dispersed polyol (A1') of the present invention.

The polyol (A) may contain another polyol corresponding to neither the polyol (A1) nor the polymer-dispersed polyol (A1'), within a range not to impair the effect of the present invention.

[Another polyol]

Such another polyol may, for example, be another polyoxyalkylene polyol not included in the polyoxyalkylene polyol (A1), another polymer-dispersed polyol (A2) not included in the polymer-dispersed polyol (A1'), a polyester polyol, a polycarbonate polyol or a polyol derived from a natural fat/oil. They may be selected from known products. Such another polyol may be used alone or in combination of two or more.

Such another polymer-dispersed polyol (A2) is preferably the after-mentioned polymer-dispersed polyol (A2').

The polyol derived from a natural fat/oil is preferably after-mentioned polyol (A3) derived from a natural fat/oil.

Such another polyoxyalkylene polyol not included in the polyol (A1), such another polymer-dispersed polyol (A2) not included in the polymer-dispersed polyol (A1'), the polyester polyol or the polycarbonate polyol is preferably one having an average number of functional groups of from 2 to 8, preferably from 2 to 6, a hydroxy value of from 10 to 160 mgKOH/g, preferably from 20 to 140 mgKOH/g, a degree of total unsaturation of at most 0.1 meq/g, preferably at most 0.08 meq/g, and a primary hydroxylation rate of the terminal hydroxy groups of at least 50%, preferably at least 70%.

When the average number of functional groups is at least 2, the durability of the flexible foam tends to be good, and when it is at most 8, the mechanical properties of the flexible foam to be produced tend to be good. Further, when the hydroxy value is at least 10 mgKOH/g, the viscosity tends to be low, whereby the good workability will be achieved, and when it is at most 160 mgKOH/g, the mechanical properties of the flexible foam to be produced tend to be good. When the degree of total unsaturation and the primary hydroxylation rate of the terminal hydroxy groups are within the above range, it is possible to further improve an effect obtained by using the polyol (A1).

(Another polymer-dispersed polyol (A2))

In the polymer-dispersed polyol (A2) other than the polymer-dispersed polyol (A1'), preferred is a polymer-dispersed polyol (A2') of which the base polyol is another polyoxyalkylene polyol not included in the polyol (A1), having an average number of functional group of from 2 to 8 and further having a hydroxy value of from 5 to 160 mgKOH/g. It is more preferred that the base polyol of the polymer-dispersed polyol (A2') has a degree of total unsaturation of at most 0.1 meq/g, and a primary hydroxylation rate of the terminal hydroxy groups of at least 50 mol%. It is preferred that the base polyol contains oxyethylene groups.

The base polyol of the polymer-dispersed polyol (A2') is more preferably a polyoxyalkylene polyol having an average number of functional group of from 2 to 6, a hydroxy value of from 5 to 160 mgKOH/g, a degree of total unsaturation of at most 0.05 meq/g and a primary hydroxylation rate of the terminal hydroxy groups of at least 50 mol%. The amount of the terminal oxyethylene chains (hereinafter, sometimes referred to as a terminal EO amount) contained in the polyoxyalkylene polyol is more preferably from 5 to 30 mass% based on the total amount of the polyoxyalkylene polyol.

(Polyol (A3) derived from natural fat/oil)

The polyol (A3) derived from a natural fat/oil is (i) a polymer having hydroxy groups imparted by a chemical reaction to a natural fat/oil having no hydroxy group, or (ii) a natural fat/oil having hydroxy groups and/or its derivative.

The polyol (A3) derived from a natural fat/oil of (i) is preferably one obtained by blowing air or oxygen to a natural fat/oil to cause oxidative crosslinking between unsaturated double bonds and at the same time, to have hydroxy groups provided, or one obtained by epoxidizing unsaturated double bonds of a natural fat/oil by having an oxidizing agent reacted therewith, followed by ring-opening in the presence of an active hydrogen compound to have hydroxy groups provided.

Further, it may be one obtained by subjecting an alkylene oxide to ring-opening addition polymerization to the polyol derived from a natural fat/oil having hydroxy groups imparted by the above method, by using a polymerization catalyst.

The natural fat/oil having no hydroxy group may be a natural fat/oil other than castor oil and purified phytosterol. Here, since phytosterol is a sterol derived from a plant, a small amount of phytosterol is contained in plant oil such as soybean oil or canola oils, and therefore inevitable inclusion of phytosterol is acceptable.

The natural fat/oil having no hydroxy group is preferably a natural fat/oil containing a fatty acid glycerate having unsaturated double bonds, and soybean oil is particularly preferred since it is inexpensive. That is, a polyol derived from soybean oil is preferred as the polyol (A3) derived from a natural fat/oil of (i).

The polyol (A3) derived from a natural fat/oil of (ii) is a natural fat/oil having hydroxy groups and/or its derivative. The natural fat/oil having hydroxy groups may, for example, be castor oil.

The derivative derived from a natural fat/oil having hydroxy groups may, for example, be the following (1) to (4).

(1) One obtained by hydrogenating a double bond of a natural fat/oil having hydroxy groups, such as hydrogenated castor oil.

(2) An ester exchange compound of a natural fat/oil having hydroxy groups and/or its hydrogenated product with a polyhydric alcohol or a polyhydric alcohol-alkylene oxide.

(3) A compound obtained by condensation of a condensate of a fatty acid constituting a natural fat/oil having hydroxy groups and/or its hydrogenated product with a polyhydric alcohol or a polyhydric alcohol/alkylene oxide adduct.

(4) E.g. an alkylene oxide adduct of a natural fat/oil having hydroxy groups and/or derivatives of the above (1) to (3).

The polyhydric alcohol may, for example, be ethylene glycol, 1,4-butanediol, neopentyl glycol, 1,6-hexanediol, diethylene glycol, triethylene glycol, dipropylene glycol, monoethanolamine, diethanolamine, triethanolamine, glycerol, sorbitol, sucrose, pentaerythritol or N-alkyldiethanol.

The polyhydric alcohol-alkylene oxide adduct may, for example, be a bisphenol A-alkylene oxide adduct, a glycerol-alkylene oxide adduct, a trimethylolpropane-alkylene oxide adduct, a pentaerythritol-alkylene oxide adduct, a sorbitol-alkylene oxide adduct, a sucrose-alkylene oxide adduct, an aliphatic amine-alkylene oxide adduct, an alicyclic amine-alkylene oxide adduct, a heterocyclic polyamine-alkylene oxide adduct or an aromatic amine-alkylene oxide adduct.

As a polymerization catalyst to be used for producing the above alkylene oxide adduct of the polyol derived from a natural fat/oil, it is possible to use one which is commonly used. For example, an alkali metal hydroxide such as sodium hydroxide (NaOH), potassium hydroxide (KOH) or cesium hydroxide (CsOH), an alcoholate compound of e.g. an alkali metal, a double metal cyanide complex, a phosphazenium compound or a cationic polymerization catalyst such as boron trifluoride, may, for example, be mentioned.

The hydroxy value of the polyol (A3) derived from a natural fat/oil is preferably from 20 to 250 mgKOH/g, more preferably from 30 to 250 mgKOH/g. In the case of a natural fat/oil having no hydroxy group, by providing it with hydroxy groups by chemical reaction, it is possible to adjust the hydroxy value to from 20 to 250 mgKOH/g.

In the present invention, the polyol (A) contains the polyol (A1) and/or the polymer-dispersed polyol (A1') in an amount of at least 10 mass%, preferably at least 20 mass%, more preferably at least 35 mass%, furthermore preferably at least 50 mass%, particularly preferably at least 60 mass%, in total, per 100 mass% of the polyol (A).

100 Mass% of the polyol (A) may be the polyol (A1) and/or the polymer-dispersed polyol (A1'). From the viewpoint of the hardness and the airflow of the flexible foam, it is preferred that the polyol (A) contains a polymer-dispersed polyol, and it is preferred that the polyol (A1) is contained in an amount of from 10 to 95 mass%, preferably from 20 to 70 mass%, and the polymer-dispersed polyol (A1') and/or the polymer-dispersed polyol (A2) is contained in an amount of from 10 to 90 mass%, preferably from 30 to 70 mass%, per 100 mass% of the polyol (A).

From the viewpoint of balance of the physical properties of the flexible foam, another polyol (including the polymer-dispersed polyol (A2)) corresponding to neither the polyol (A1) nor the polymer-dispersed polyol (A1') is contained in an amount of preferably from 10 to 90 mass%, more preferably from 20 to 70 mass%, per 100 mass% of the polyol (A). Further, the polyol (A) contains the polymer-dispersed polyol (A2) other than the polymer-dispersed polyol (A1') in an amount of preferably from 10 to 90 mass%, more preferably from 20 to 70 mass%, per 100 mass% of the polyol (A).

<Another high-molecular-weight active hydrogen compound>

As a compound to be reacted with the polyisocyanate compound (B), it is possible to use the polyol (A) and another high-molecular-weight active hydrogen compound in combination.

Such another high-molecular-weight active hydrogen compound may, for example, be urea, melamine or its derivative, or a high-molecular-weight polyamine, having at least 2 primary amino groups or secondary amino groups; or a high-molecular-weight compound having at least one primary amino group or secondary amino group and at least one hydroxy group.

The high-molecular-weight polyamine or the high-molecular-weight compound may be a compound obtained by converting some or all hydroxy groups in a polyoxyalkylene polyol to amino groups; or a compound obtained in such a manner that a prepolymer having isocyanate groups at its terminals, is obtained by reacting a polyoxyalkylene polyol with an excess equivalent of a polyisocyanate compound, and the isocyanate groups of the prepolymer are converted to amino groups by hydrolysis.

The molecular weight per functional group of such another high-molecular-weight active hydrogen compound is preferably at least 400, more preferably at least 800. The molecular weight per functional group is preferably at most 5,000.

The average number of functional groups of such another high-molecular-weight active hydrogen compound is preferably from 2 to 8, more preferably from 2 to 6.

The proportion of such another high-molecular-weight active hydrogen compound is preferably at most 20 mass%, more preferably at most 15 mass%, based on the total amount (100 mass%) of the polyol (A) and another high-molecular-weight active hydrogen compound. When the proportion of such another high-molecular-weight active hydrogen compound is at most 20 mass%, the reactivity with the polyisocyanate compound (B) will not be too high, whereby the moldability or the like of the flexible foam tends to be good.

<Polyisocyanate compound (B)>

The polyisocyanate compound (B) may, for example, be an aromatic polyisocyanate compound having at least 2 isocyanate groups, a mixture of two or more of such compounds, or a modified polyisocyanate obtained by modifying it. Specifically, it is preferably at least one member selected from the group consisting of tolylene diisocyanate (TDI), diphenylmethane diisocyanate (MDI), polymethylene polyphenyl isocyanate (common name: polymeric MDI) and modified products thereof. The modified products may, for example, be a prepolymer modified product, an isocyanurate modified product, a urea modified product and a carbodiimide modified product.

The total amount of MDI and polymeric MDI is preferably more than 0 mass% and at most 100 mass%, more preferably from 5 to 80 mass%, particularly preferably from 10 to 60 mass%, based on the polyisocyanate compound (B) (100 mass%). When the total amount of MDI and polymeric MDI is at most 80 mass%, the flexible foam physical properties such as durability, touch of a flexible foam, etc. become good. Further, in the case of using the modified product, the amount is preferably 100 mass%, and TDI may be contained. Specifically, the mixing ratio of the modified product to TDI is preferably from 100:0 to 90:10 by mass ratio, more preferably from 80:20 to 50:50 by mass ratio.

The amount of the polyisocyanate compound (B) used is preferably such an amount that the isocyanate index is from 70 to 125, particularly preferably from 80 to 120, from the viewpoint of the physical properties and the moldability of the flexible polyurethane foam. When the isocyanate index is at least 70, the closed cell proportion is moderate, whereby cracking is unlikely to occur when the foam is released from the mold, and when the isocyanate index is at most 125, it is possible to achieve sufficient curing.

The isocyanate index is a value represented by 100 times of the number of isocyanate groups based on the total active hydrogen of the polyol (A), another high-molecular-weight active hydrogen compound, a crosslinking agent (F), water, and the like.

<Catalyst (C)>

The catalyst (C) is a catalyst to accelerate a urethane-forming reaction.

As the catalyst (C), an amine compound, an organic metal compound, a reactive amine compound or a metal carboxylate may, for example, be mentioned. Such catalysts (C) may be used alone or in combination as a mixture of two or more of them.

As the amine compound, triethylenediamine, a dipropylene glycol solution of bis-(2-dimethylaminoethyl) ether and an aliphatic amine such as morpholine may, for example, be mentioned.

The reactive amine compound is a compound wherein a part of the amine compound structure is converted to a hydroxy group or an amino group so as to be reactive with an isocyanate group.

As the reactive amine compound, dimethylethanolamine, trimethylaminoethylethanolamine and dimethylaminoethoxyethoxyethanol may, for example, be mentioned.

In a case where the amine compound or the reactive amine compound is used as the catalyst (C), the amount to be used is preferably at most 2.0 parts by mass, more preferably from 0.05 to 1.5 parts by mass, per 100 parts by mass in total of the polyol (A) and another high-molecular-weight active hydrogen compound.

The organic metal compound may, for example, be an organic tin compound, an organic bismuth compound, an organic lead compound, an organic zinc compound or an organic titanium compound. Specific examples may be di-n-butyltin oxide, di-n-butyltin dilaurate, di-n-butyltin, di-n-butyltin diacetate, di-n-octyltin oxide, di-n-octyltin dilaurate, monobutyltin trichloride, di-n-butyltin dialkyl mercaptan, and di-n-octyltin dialkyl mercaptan.

In a case where the organic metal compound is used, the amount to be used is preferably at most 2.0 parts by mass, more preferably from 0.005 to 1.5 parts by mass, per 100 parts by mass in total of the polyol (A) and another high-molecular-weight active hydrogen compound.

<Blowing agent (D)>

As the blowing agent (D), preferred is at least one member selected from the group consisting of water and an inert gas. In view of handling efficiency and reduction in the environmental burden, water alone is preferred. As the inert gas, air, nitrogen gas, liquified carbon dioxide gas or the like may be mentioned. The amount of such a blowing agent (D) may be adjusted depending on the requirement such as a blowing magnification.

When only water is used as the blowing agent, the amount of water is preferably at most 10 parts by mass, particularly preferably from 0.1 to 8 parts by mass, per 100 parts by mass in total of the polyol (A) and another high-molecular-weight active hydrogen compound.

<Foam stabilizer (E)>

The foam stabilizer (E) is a component to form good foams. The foam stabilizer may, for example, be polymethyl silicone oil, a silicone type foam stabilizer or a fluorine type foam stabilizer. The amount of the foam stabilizer is preferably from 0.001 to 10 parts by mass, more preferably from 0.05 to 5 parts by mass per 100 parts by mass in total of the polyol (A) and another high-molecular-weight active hydrogen compound.

<Crosslinking agent (F)>

In the present invention, it is possible to use a crosslinking agent (F) as a case requires in addition to the above components. By using a crosslinking agent (F), the hardness of the flexible foam may optionally be increased.
The crosslinking agent (F) is preferably a compound having an average number of functional groups of from 2 to 8, preferably from 3 to 6, and a hydroxy value of from 200 to 2,000 mgKOH/g, preferably from 300 to 1,000 mgKOH/g. The crosslinking agent (F) may be a compound which has at least 2 functional groups selected from hydroxy groups, primary amino groups and secondary amino groups. Such crosslinking agents (F) may be used alone or in combination as a mixture of two or more of them.
The crosslinking agent (F) having hydroxy groups is preferably a compound having from 2 to 8 hydroxy groups, and may, for example, be a polyhydric alcohol, or a low-molecular-weight polyoxyalkylene polyol obtained by adding an alkylene oxide to the polyhydric alcohol or a polyol having a tertiary amino group.
Specific examples of the crosslinking agent (F) having hydroxy groups may be ethylene glycol, 1,4-butanediol, neopentyl glycol, 1,6-hexanediol, diethylene glycol, triethylene glycol, dipropylene glycol, monoethanolamine, diethanolamine, triethanolamine, glycerol, sorbitol, sucrose, pentaerythritol, N-alkyl diethanol, a bisphenol A-alkylene oxide adduct, a glycerol-alkylene oxide adduct, a trimethylolpropane-alkylene oxide adduct, a pentaerythritol-alkylene oxide adduct, a sorbitol-alkylene oxide adduct, a sucrose-alkylene oxide adduct, an aliphatic amine-alkylene oxide adduct, an alicyclic amine-alkylene oxide adduct, a heterocyclic polyamine-alkylene oxide adduct, an aromatic amine-alkylene oxide adduct, and a polyol derived from a natural product.
The heterocyclic polyamine-alkylene oxide adduct is obtained by subjecting an alkylene oxide to ring-opening addition polymerization to e.g. piperazine, a short-chain alkyl-substituted piperazine (such as 2-methylpiperazine, 2-ethylpiperazine, 2-butylpiperazine, 2-hexylpiperazine, 2,5-, 2,6-, 2,3- or 2,2-dimethylpiperazine, or 2,3,5,6- or 2,2,5,5-tetramethylpiperazine), or an aminoalkyl-substituted piperazine (such as 1-(2-aminoethyl)piperazine).
The crosslinking agent (F) (amine type crosslinking agent) having primary amino groups or secondary amino groups may, for example, be an aromatic polyamine, an aliphatic polyamine or an alicyclic polyamine.
The aromatic polyamine is preferably an aromatic diamine. The aromatic diamine is preferably an aromatic diamine having at least one substituent selected from the group consisting of an alkyl group, a cycloalkyl group, an alkoxy group, an alkylthio group and an electron-attractive group, in an aromatic nucleus having amino groups bonded thereto, particularly preferably a diaminobenzene derivative.
With respect to the above substituents except for the electron-attractive group, from 2 to 4 substituents are preferably bonded to the aromatic nucleus having amino groups bonded thereto, more preferably at least one at an ortho-position to the position where the amino group is bonded, particularly preferably, they are bonded at all positions.
With respect to the electron-attractive group, 1 or 2 groups are preferably bonded to the aromatic nucleus having amino groups bonded thereto. The electron-attractive group and another substituent may be bonded to one aromatic nucleus.
The alkyl group, alkoxy group and alkylthio group preferably have at most 4 carbon atoms.
The cycloalkyl group is preferably a cyclohexyl group.
The electron-attractive group is preferably a halogen atom, a trihalomethyl group, a nitro group, a cyano group or an alkoxycarbonyl group, particularly preferably a chlorine atom, a trifluoromethyl group or a nitro group.
The aliphatic polyamine may, for example, be a diaminoalkane having at most 6 carbon atoms, a polyalkylene polyamine, a polyamine obtained by converting some or all hydroxy groups in a low-molecular-weight polyoxyalkylene polyol to amino groups, or an aromatic compound having at least 2 aminoalkyl groups.
The alicyclic polyamine may be a cycloalkane having at least 2 amino groups and/or aminoalkyl groups.
Specific examples of the amine type crosslinking agent may be 3,5-diethyl-2,4(or 2,6)-diaminotoluene (DETDA), 2-chloro-p-phenylenediamine (CPA), 3,5-dimethylthio-2,4(or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, ethylenediamine, m-xylenediamine, 1,4-diaminohexane, 1,3-bis(aminomethyl)cyclohexane and isophorone diamine, and preferred is diethyltoluenediamine (that is one type or a mixture of two or more types of 3,5-diethyl-2,4(or 2,6)-diaminotoluene), dimethylthiotoluenediamine or a diaminobenzene derivative such as monochlorodiaminobenzene or trifluoromethyldiaminobenzene.

The amount of the crosslinking agent (F) is preferably from 0.1 to 20 parts by mass, more preferably from 0.2 to 15 parts by mass, particularly preferably from 0.3 to 10 parts by mass per 100 parts by mass of the total amount of the polyol (A) and another high-molecular-weight active hydrogen compound. When it is at least 0.1 part by mass, moderate hardness can be imparted to the flexible foam, and the foaming behavior will be stable. When it is at most 20 parts by mass, flexibility can be imparted to the flexible foam, and mechanical properties such as elongation and tear strength will be good.

[Cell opener]

In the present invention, a cell opener may be used as the case requires. The use of the cell opener is preferred from the viewpoint of the moldability of the flexible foam, specifically, the reduction of closed cells. The cell opener is preferably a polyoxyalkylene polyol having an average of from 2 to 8 hydroxy groups, a hydroxy value of from 20 to 200 mgKOH/g and a proportion of ethylene oxide of from 50 to 100 mass% in the alkylene oxide. As the case requires, a polyol obtained by subjecting PO and EO to random ring-opening addition polymerization, or a polyol obtained by subjecting PO and EO to random ring-opening addition polymerization and then subjecting EO to ring-opening addition polymerization, can be also used as a cell opener. The EO content of such a polyol is preferably from 40 to 95 mass%, more preferably from 60 to 90 mass%, per 100 mass% of the polyol. The primary hydroxylation rate of the terminal hydroxyl groups in the polyol is preferably at least 40%, more preferably at least 45%.

[Other compounding ingredients]

In addition to the above components, other compounding ingredients optionally used may, for example, be a filler, a stabilizer, a colorant and a flame retardant.

<Foaming Step>

The method of the foaming step may be a method in which the foam stock solution composition is expansion-molded in a closed mold (a molding method) or a method in which the foam stock solution composition is foamed in an open system (a slab method).

(Molding method)

As the molding method, preferred is a method of directly injecting the foam stock solution composition into a closed mold (a reaction-injection molding method) or a method in which the foam stock solution composition is injected into a mold in an open state, followed by closing. As the latter method, it is preferably carried out by a method of injecting the foam stock solution composition into a mold by using a low pressure foaming machine or a high pressure foaming machine.

The high pressure foaming machine is preferably of a type to mix two liquids. As a preferred embodiment, one of the two liquids is the polyisocyanate compound (B) and the other liquid (polyol system solution) is a mixture of all components other than the polyisocyanate compound (B). Depending on a case, it may be a type to mix three liquids by having the catalyst (C) or the cell opener as a separate component (which is usually used as dispersed or dissolved in a part of a high-molecular-weight polyol).

The temperature of the foam stock solution composition is preferably from 10 to 50°C, more preferably from 30 to 50°C. When the temperature is at least 10°C, the viscosity of the foam stock solution composition will not be too high, whereby liquid mixing of the liquids tends to be good. When the temperature is at most 50°C, the reactivity will not be too high, whereby the moldability or the like tends to be good.

The mold temperature is preferably from 10 to 80°C, particularly preferably from 30 to 70°C.

The curing time is preferably from 1 to 20 minutes, more preferably from 3 to 10 minutes, particularly preferably from 4 to 7 minutes. When the curing time is at least the lower limit of the above range, curing will be sufficiently conducted. When the curing time is at most the upper limit of the above range, productivity will be good.

(Slab method)

The slab method may be a known method such as a one shot method, a semiprepolymer method or a prepolymer method. For the production of the flexible foam, it is possible to use a known production apparatus.

According to the present invention, in the process for producing a polyoxyalkylene polyol having a low degree of total unsaturation by using a DMC catalyst, it is possible to improve the efficiency of the primary hydroxylation of the terminal hydroxy groups to the addition amount of EO at the time of conducting EO cap.

That is, as described in the after-mentioned Examples, it is possible to improve the primary hydroxylation rate without increasing the content of oxyethylene groups in the polyoxyalkylene polyol. When a flexible foam is produced by using such a polyoxyalkylene polyol, it is possible to improve the curing property without deteriorating the wet heat durability. The improvement of the curing property also contributes to the improvement of the wet heat durability.

Further, it is possible to reduce the EO addition amount without reducing the primary hydroxylation rate in the polyoxyalkylene polyol. When a flexible foam is produced by using such a polyoxyalkylene polyol, it is possible to improve the wet heat durability without reducing the curing property.

Further, in the process of the present invention, most of PO in the polyol (A1) is subjected to ring-opening addition polymerization in the presence of a DMC catalyst in the first polymerization step, and the amount of PO to be subjected to ring-opening addition polymerization in the presence of an alkali catalyst is small (from 0.28 to 3.00 mol per 1 mol of functional groups of the initiator) in the second polymerization step, whereby it is possible to suppress the increase of the degree of total unsaturation of the polyol by carrying out the second polymerization step.

Therefore, according to the present invention, it is possible to produce a flexible foam having not only good hardness, rebound resilience and durability but also curing property, while achieving low density and/or thickness reduction, as described in the after-mentioned Examples.

The reason why the above effects can be obtained is considered to be as follows. That is, in the first polymerization step of the present invention, PO and/or a mixture of PO and EO is subjected to ring-opening addition polymerization to an initiator in the presence of the DMC catalyst (a1). In the case of the above method (I) where PO is subjected to ring-opening addition polymerization to the initiator, primary hydroxy groups (e.g. about 7 mol%) and secondary hydroxy groups (e.g. about 93 mol%) are mixed in terminals of the first intermediate polyol obtainable by the method. Further, in the case of the above method (II) or (III) where a mixture of PO and EO is used, from 10 to 15 mol% of the primary hydroxy groups and about from 85 to 90 mol% of the secondary hydroxy groups are mixed in the terminals of the first intermediate polyol although it depends on the EO content.

According to the present invention, in the second polymerization step, PO is subjected to ring-opening addition polymerization to the first intermediate polyol in the presence of a polymerization catalyst (A2) made of an alkali metal hydroxide or an alkali metal alcoholate compound, to produce the second intermediate polyol. In a case where such a polymerization catalyst (a2) is used, the H-T bond selectivity is almost 100%, and therefore almost 100% of hydroxy groups at the terminals of the second intermediate polyol obtained become secondary hydroxy groups. Accordingly, in the subsequent third polymerization step, primary hydroxy groups are hardly present as mixed at the terminals of the second intermediate polyol, and in such a state, EO cap can be conducted, whereby EO is uniformly added to the terminals of the second intermediate polyol. It is thereby possible to improve the efficiency of the primary hydroxylation of the terminal hydroxy group to the EO addition amount, as compared with a conventional method where EO cap is conducted in a state where primary hydroxy groups and secondary hydroxy groups are present as mixed at the terminals.

The flexible polyurethane foam of the present invention is suitable for especially a seat member (such as a seat cushion or a seat back) for automobiles, and it is possible to obtain good hardness, rebound resilience and durability while achieving density reduction and/or thickness reduction.

The flexible polyurethane foam of the present invention preferably has e.g. a core density of from 20 to 100 kg/m$^3$, more preferably from 24 to 75 kg/m$^3$. When the flexible polyurethane foam of the present invention is used for a seat back rest for automobiles, the core density is preferably from 22 to 35 kg/m$^3$, more preferably from 24 to 28 kg/m$^3$. When the flexible polyurethane foam of the present invention is used for a seat cushion for automobiles, the core density is preferably from 30 to 75 kg/m$^3$, more preferably from 35 to 65 kg/m$^3$.

The thickness of the flexible polyurethane foam of the present invention is preferably from 10 to 150 mm. For example, the thickness is more preferably from 10 to 80 mm when it is used for a seat back rest for automobiles, and the thickness is more preferably from 30 to 130 mm when it is used for a seat cushion for automobiles.

EXAMPLES

Now, the present invention will be described in further detail with reference to Examples, but it should be understood that the present invention is by no means restricted thereto. In the following, "%" means "mass%" unless otherwise specified, provided that "%" as a unit for a primary hydroxylation rate of the terminal hydroxy groups means "mol%".

[Preparation Example 1: Preparation of TBA-DMC Catalyst]

A zinc hexacyanocobaltate complex (DMC catalyst) having tert-butyl alcohol (hereinafter referred to as TBA) coordinated was prepared as follows.

In a 500 mL flask, an aqueous solution comprising 10.2 g of zinc chloride and 10 g of water was put. While the zinc chloride aqueous solution was stirred at 300 rpm, an aqueous solution comprising 4.2 g of potassium hexacyanocobaltate ($K_3Co(CN)_6$) and 75 g of water was dropwise added to the zinc chloride aqueous solution over a period of 30 minutes. During the dropwise addition, the mixed solution in the flask was kept at 40°C. After completion of dropwise addition of the potassium hexacyanocobaltate aqueous solution, the mixture in the flask was stirred further for 30 minutes, and a mixture comprising 80 g of tert-butyl alcohol, 80 g of water and 0.6 g of the polyol P as described below was added, followed by stirring at 40°C for 30 minutes and at 60°C further for 60 minutes.

The polyol P is a polyoxypropylene diol having an average number of functional groups of 2.0 per molecule and a mass average molecular weight (Mw) of 2,000, obtained by subjecting propylene oxide to ring-opening addition polymerization to propylene glycol in the presence of a potassium hydroxide catalyst, followed by dealkalization purification.

The obtained mixture was subjected to filtration using a circular filter plate having a diameter of 125 mm and a quantitative filter paper for particles (manufactured by ADVANTEC Toyo Kaisha, Ltd., No. 5C) under elevated pressure (0.25 MPa) to obtain a solid (cake) containing a double metal cyanide complex catalyst.

The cake was put in a flask, a mixed liquid comprising 36 g of TBA and 84 g of water was added, followed by stirring for 30 minutes, and the mixture was subjected to filtration under elevated pressure under the same conditions as above to obtain a cake.

The cake was put in a flask, and a mixed liquid comprising 108 g of TBA and 12 g of water was further added, followed by stirring for 30 minutes to obtain a slurry having the double metal cyanide complex catalyst dispersed in the TBA-water mixed liquid. 120 g of the polyol P was added to the slurry, and volatile components were distilled off under reduced pressure at 80°C for 3 hours and at 115°C further for 3 hours to obtain a DMC catalyst in the form of a slurry (TBA-DMC catalyst (hereinafter sometimes referred to as "a TBA-DMC catalyst slurry")). The concentration (active ingredient concentration) of the DMC catalyst (solid catalyst component) contained in the slurry was 5.33 mass%.

[Example 1: Production of polyol (A1-1)]

The initiator used in this Example was a polyoxypropylene triol having a mass average molecular weight (Mw) of 1,500 and a hydroxy value of 112 mgKOH/g, prepared by subjecting PO to ring-opening addition polymerization to glycerol using a KOH catalyst, followed by purification by using KYOWAAD 600S (tradename, synthetic adsorbent, manufactured by Kyowa Chemical Industry Co., Ltd.).

(First polymerization step)

First, into the pressure resistant reactor, 1,000 g of the initiator and the TBA-DMC catalyst slurry prepared in Preparation Example 1 were charged to obtain a reaction fluid. The amount of the TBA-DMC catalyst slurry charged was such an amount that the metal concentration of the TBA-DMC catalyst in the reaction fluid became 46 ppm.

Then, the interior in the pressure resistant reactor was replaced with nitrogen, thereafter the reaction fluid was heated to 130°C with stirring, and 120 g of PO was supplied. When PO was supplied into the pressure resistant reactor, the internal pressure of the pressure resistant reactor was once increased and then gradually decreased, and it was confirmed to be the same internal pressure of the pressure resistant reactor immediately before supply of PO.

Then, while the reaction fluid was stirred, 4,728 g of PO was supplied to the pressure resistant reactor, followed by reaction at 130 °C for 7 hours. Of the first intermediate polyol obtained by this step, the mass average molecular weight (Mw) was 5,980, the hydroxyl value was 28.1 mgKOH/g and the primary hydroxylation rate of the terminal hydroxyl groups was 7.90%.

(Second polymerization step)

It was confirmed that the internal pressure of the pressure resistant reactor no more changed and the reaction was completed after the first polymerization step, the reaction fluid was cooled to 120°C, potassium hydroxide at an active ingredient concentration of 0.3% to the final product was added, to carry out alcoholation by dehydration at 120°C for 2 hours. Then, while the reaction fluid was maintained at 120°C, 170 g (1 mol per 1 mol of the functional groups of the initiator) of PO was supplied to the pressure resistant reactor, followed by reaction for two hours. Of the second intermediate polyol obtained by this step, the mass average molecular weight (Mw) was 6,160, the hydroxyl value was 27.3 mgKOH/g and the primary hydroxylation rate of the terminal hydroxyl groups was 2.29%.

(Third polymerization step)

It was confirmed that the internal pressure of the pressure resistant reactor no more changed and the reaction was completed after the second polymerization step, 823 g (12 mass% of the total amount of the polyol) of EO was additionally supplied to the pressure resistant reactor, followed by reaction at 120 °C for 5 hours. Then, it was confirmed that the internal pressure no more changed and the reaction was completed, and thereafter the operation of adsorbing and removing the catalyst was carried out by using KYOWAAD 600S (tradename, synthetic adsorbent, manufactured by Kyowa Chemical Industry Co., Ltd.).

Of the polyol (A1-1) thus obtained, the average number of functional groups was 3.0, the hydroxyl value was 24 mgKOH/g, the mass average molecular weight (Mw) was 7,000, the degree of total unsaturation was 0.012 meq/g, the molecular weight distribution (Mw/Mn) was 1.04, the oxyethylene group content was 12 mass%, and the primary hydroxylation rate of the terminal hydroxyl group was 85.5%.

[Examples 2 to 7]

Polyoxyalkylene polyol was produced in the same manner as in Example 1 except that the PO addition amount in the second polymerization step and the EO addition amount in the third polymerization step were changed as shown in Table 1, and the PO addition amount in the first polymerization step was adjusted so that the mass average molecular weight (Mw) of the polyol finally obtainable would be 7,000 in Examples 2 to 6 and 10,000 in Example 7.

The primary hydroxylation rate of the terminal hydroxy groups after each polymerization step, and the degree of total unsaturation and the hydroxy value of a polyol obtained, are shown in Table 1.

[Example 8: Production of polyol (A1-3)]

(First polymerization step)

Into the pressure resistant reactor, 1,000 g of the initiator used in the production of the polyol (A1-1) and the TBA-DMC catalyst slurry prepared in Preparation Example 1 were charged to obtain a reaction fluid. The amount of the TBA-DMC catalyst slurry charged was such an amount that the metal concentration of the TBA-DMC catalyst in the reaction fluid became 46 ppm.

Then, the interior in the pressure resistant reactor was replaced with nitrogen, thereafter the reaction fluid was heated to 130°C with stirring, and 120 g of PO was supplied. When PO was supplied into the pressure resistant reactor, the internal pressure of the pressure resistant reactor was once increased and then gradually decreased, and it was confirmed to be the same internal pressure of the pressure resistant reactor immediately before supply of PO.

Then, while the reaction fluid was stirred, a mixture of 3,895 g of PO and 855 g of EO (PO/EO=82/18 (mass% ratio)) was supplied to the pressure resistant reactor, followed by reaction at 130°C for 7 hours. Of the first intermediate polyol obtained by this step, the mass average molecular weight (Mw) was 6,011, the hydroxyl value was 28.0 mgKOH/g and the primary hydroxylation rate of the terminal hydroxyl groups was 10.01%.

(Second polymerization step)

It was confirmed that the internal pressure of the pressure resistant reactor no more changed and the reaction was completed after the first polymerization step, the reaction fluid was cooled to 120°C, potassium hydroxide at an active ingredient concentration of 0.3% to the final product was added, to carry out alcoholation by dehydration at 120°C for 2 hours. Then, while the reaction fluid was maintained at 120°C, 170 g (1 mol per 1 mol of the functional groups of the initiator) of PO was supplied to the pressure resistant reactor, followed by reaction for two hours. Of the second intermediate polyol obtained by this step, the mass average molecular weight (Mw) was 6,195, the hydroxyl value was 27.2 mgKOH/g and the primary hydroxylation rate of the terminal hydroxyl groups was 2.35%.

(Third polymerization step)

It was confirmed that the internal pressure of the pressure resistant reactor no more changed and the reaction was completed after the second polymerization step, 840 g (12 mass% of the total amount of the polyol, and 6.4 mol per 1 mol of the functional groups of the initiator) of EO was additionally supplied to the pressure resistant reactor, followed by reaction at 120°C for 5 hours. It was confirmed that the internal pressure no more changed and the reaction was completed, and thereafter the operation of neutralizing and removing the catalyst was carried out by using KYOWAAD 600S (tradename, synthetic adsorbent, manufactured by Kyowa Chemical Industry Co., Ltd.).

Of the polyol (A1-3) thus obtained, the average number of functional groups was 3.0, the hydroxyl value was 24.0 mgKOH/g, the mass average molecular weight (Mw) was 7,000, the degree of total unsaturation was 0.012 meq/g, the molecular weight distribution (Mw/Mn) was 1.035, the total oxyethylene group content was 15.5 %, the terminal oxyethylene group content was 12 mass%, and the primary hydroxylation rate of the terminal hydroxyl groups was 86.2 %.

[Example 9: Production of polyol (A1-4)]

The initiator used in this Example is polyoxypropylene polyol obtainable by the following method. That is, PO was subjected to ring-opening addition polymerization to pentaerythritol dissolved in water by using a KOH catalyst to obtain polyoxypropylene polyol having a mass average molecular weight (Mw) of 500 and a hydroxy value of 450 mgKOH/g. This polyoxypropylene polyol was mixed with pentaerythritol, and PO was subjected to ring-opening addition polymerization to obtain polyoxypropylene polyol having a mass average molecular weight (Mw) of 550 and a hydroxy value of 410 mgKOH/g. Further, PO was subjected to ring-opening addition polymerization to this polyoxypropylene polyol, followed by purification by using KYOWAAD 600S (tradename, synthetic adsorbent, manufactured by Kyowa Chemical Industry Co., Ltd.) to obtain polyoxypropylene polyol having a mass average molecular weight (Mw) of 1,200 and a hydroxy value of 187 mgKOH/g. By using the polyoxypropylene polyol as an initiator, the following steps were carried out.

(First polymerization step)

First, into the pressure resistant reactor, 1,000 g of the initiator and the TBA-DMC catalyst slurry prepared in Preparation Example 1 were charged to obtain a reaction fluid. The amount of the TBA-DMC catalyst slurry charged was such an amount that the metal ,concentration of the TBA-DMC catalyst in the reaction fluid became 46 ppm.

Then, the interior in the pressure resistant reactor was replaced with nitrogen, thereafter the reaction fluid was heated to 130°C with stirring, and 120 g of PO was supplied. When PO was supplied into the pressure resistant reactor, the internal pressure of the pressure resistant reactor was once increased and then gradually decreased, and it was confirmed to be the same internal pressure of the pressure resistant reactor immediately before supply of PO.

Then, while the reaction fluid was stirred, 10,088 g of PO was supplied to the pressure resistant reactor, followed by reaction at 130°C for 7 hours. Of the first intermediate polyol obtained by this step, the mass average molecular weight (Mw) was 10,808, the hydroxyl value was 20.8 mgKOH/g and the primary hydroxylation rate of the terminal hydroxyl groups was 7.31 %.

(Second polymerization step)

It was confirmed that the internal pressure of the pressure resistant reactor no more changed and the reaction was completed after the first polymerization step, the reaction fluid was cooled to 120°C, potassium hydroxide at an active ingredient concentration of 0.3% to the final product was added, to carry out alcoholation by dehydration at 120°C for 2 hours. Then, while the reaction fluid was maintained at 120°C, 244 g (1 mol per 1 mol of the functional groups of the initiator) of PO was supplied to the pressure resistant reactor, followed by reaction for two hours. Of the second intermediate polyol obtained by this step, the mass average molecular weight (Mw) was 11,040, the hydroxyl value was 20.3 mgKOH/g and the primary hydroxylation rate of the terminal hydroxyl groups was 2.18%.

(Third polymerization step)

It was confirmed that the internal pressure of the pressure resistant reactor no more changed and the reaction was completed after the second polymerization step, 960 g (8 mass% of the total amount of the polyol) of EO was additionally supplied to the pressure resistant reactor, followed by reaction at 120°C for 5 hours. Then, it was confirmed that the internal pressure no more changed and the reaction was completed, and thereafter the operation of adsorbing and removing the catalyst was carried out by using KYOWAAD 600S (tradename, synthetic adsorbent, manufactured by Kyowa Chemical Industry Co., Ltd.).

Of the polyol (A1-4) thus obtained, the average number of functional groups was 4.0, the hydroxyl value was 18.5 mgKOH/g, the mass average molecular weight (Mw) was 12,000, the degree of total unsaturation was 0.010 meq/g, the molecular weight distribution (Mw/Mn) was 1.04, the oxyethylene group content was 8 mass%, and the primary hydroxylation rate of the terminal hydroxyl groups was 86.3 %.

Main production conditions, the primary hydroxylation rate of the terminal hydroxyl groups after each polymerization step, and the degree of total unsaturation and the hydroxy value of the polyol obtained, are shown in Table 1.

[Comparative Example 1: Production of comparative polyol (1)]

In Example 1, a polyoxyalkylene polyol was produced without carrying out the second polymerization step.

That is, the first intermediate polyol was obtained in the same manner as in the first polymerization step in Example 1, except that the PO supply amount was changed from 4,728 g to 4,898 g. Of the first intermediate polyol, the mass average molecular weight (Mw) was 6,160, and the hydroxyl value was 27.3 mgKOH/g. The primary hydroxylation rate of the terminal hydroxyl groups was 7.6 %.

Then, potassium hydroxide at an active ingredient concentration of 0.3% to the final product was added, to carry out alcoholation by dehydration at 120°C for 2 hours. Then, while the reaction fluid was maintained at 120°C, 823 g (12 mass% of the total amount of the polyol) of EO was supplied to the pressure resistant reactor, followed by reaction at 120°C for 5 hours. It was confirmed that the internal pressure no more changed and the reaction was completed, and thereafter the operation of neutralizing and removing the catalyst was carried out by using KYOWAAD 600S (tradename, synthetic adsorbent, manufactured by Kyowa Chemical Industry Co., Ltd.).

Of the comparative polyol (1) thus obtained, the average number of functional groups was 3.0, the hydroxyl value was 24 mgKOH/g, the mass average molecular weight (Mw) was 7,000, the degree of total unsaturation was 0.008 meq/g, the molecular weight distribution (Mw/Mn) was 1.04, the oxyethylene group content was 12 mass%, and the primary hydroxylation rate of the terminal hydroxyl groups was 82.0 %.

[Comparative Examples 2 to 4]

Polyoxyalkylene polyol was produced in the same manner as in Comparative Example 1 except that the EO addition amount in the third polymerization step was changed as shown in Table 1, and the PO addition amount in the first polymerization step was adjusted so that the mass average molecular weight of the polyoxyalkylene polyol finally obtainable would be 7,000.

The primary hydroxylation rate of the terminal hydroxy groups after each polymerization step, and the degree of total unsaturation and the hydroxy value of the polyol obtained are shown in Table 1.

[Comparative Example 5: Production of comparative polyol (2)]

In this Example, PO was subjected to ring-opening addition polymerization to an initiator in the presence of a potassium hydroxide (KOH) catalyst, and then EO was subjected to ring-opening addition polymerization.

That is, in the same reactor as in Example 1, 1,000 g of the same initiator as in Example 1, 20 g of a potassium hydroxide catalyst at an active ingredient concentration of 0.3% to the final product and 6,003 g of PO were charged, followed by stirring at 120°C for 10 hours to carry out ring-opening addition polymerization. Then, 1,140 g (14 mass% of the total amount of the polyol) were further charged, followed by stirring at 110°C for 1.5 hours to carry out ring-opening addition polymerization thereby to obtain a polyoxyalkylene polyol.

Of the obtained comparative polyol (2), the average number of functional groups was 3, the hydroxy value was 24 mgKOH/g, the mass average molecular weight (Mw) was 7,000, the degree of total unsaturation was 0.10 meq/g, the molecular weight distribution (Mw/Mn) was 1.06, the oxyethylene group content was 14 mass%, the primary hydroxylation rate of the terminal hydroxy groups was 78.0%.

[Comparative Example 6: Production of comparative polyol (3)]

The polyoxyalkylene polyol was produced in the same manner as in Comparative Example 1 except that the EO addition amount in the third polymerization step was changed as shown in Table 1, and the PO addition amount in the first polymerization step was adjusted so that the mass average molecular weight of the finally obtainable polyoxyalkylene polyol would be 10,000.

That is, the first intermediate polyol was obtained in the same manner as in the first polymerization step in Example 1 except that the PO supply amount was changed from 4,728 g to 7,350 g. Of the first intermediate polyol obtained, the mass average molecular weight (Mw) was 8,520, and the hydroxy value was 19.8 mgKOH/g. The primary hydroxylation rate of the terminal hydroxy groups was 7.99%.

Then, potassium hydroxide at an active ingredient concentration of 0.3% to the final product was added thereto, to carry out alcoholation by dehydration at 120°C for 2 hours. Then, while the reaction fluid was maintained at 120°C, 1,050 g (10 mass% of the total amount of the polyol) of EO was supplied to the pressure resistant reactor, followed by reaction at 120°C for 5 hours. It was confirmed that the internal pressure no more changed and the reaction was completed, and thereafter the operation of neutralizing and removing the catalyst was carried out by using KYOWAAD 600S (tradename, synthetic absorbent, manufactured by Kyowa Chemical Industry Co., Ltd.).

Of the comparative polyol (3) thus obtained, the average number of functional group was 3.0, the hydroxy value was 16.6 mgKOH/g, the mass average molecular weight (Mw) was 10,000, the degree of total unsaturation was 0.007 meq/g, the molecular weight distribution (Mw/Mn) was 1.04, the oxyethylene group content was 10 mass%, and the primary hydroxylation rate of the terminal hydroxy groups was 86.4%.

Main production conditions, the primary hydroxylation rate of the terminal hydroxy groups after each polymerization step, and the degree of total unsaturation and the hydroxy value of the polyol obtained, are shown in Table 1.

[Table 1]

| | | Comp. Ex. 1<br>Comparative polyol (1) | Ex. 1<br>Polyol (A1-1) | Ex. 2 | Ex. 3 | Comp. Ex. 2 | Ex. 4 | Comp. Ex. 3 | Ex. 5 |
|---|---|---|---|---|---|---|---|---|---|
| Average number of functional groups | | 3 | | | | 3 | | 3 | |
| Primary hydroxylation rate of terminal hydroxy groups after first polymerization step | | 8.00% | 7.90% | 7.85% | 7.99% | 8.12% | 7.99% | 8.01% | 7.69% |
| PO addition amount in second polymerization step | Per 1 mol of functional groups in initiator | 0 | 1.00 mol | 0.67 mol | 0.33 mol | 0 | 1.00 mol | 0 | 1.00 mol |
| Primary hydroxylation rate of terminal hydroxy groups after second polymerization step | | - | 2.29% | 2.31% | 2.35% | - | 2.22% | - | 2.25% |
| EP addition amount in third polymerization step | Proportion in the total amount of polyol | 12 mass% | | | | 15 mass% | | 17 mass% | |
| | Per 1 mol of functional groups in initiator | 6.4 mol | | | | 8.0 mol | | 9.0 mol | |
| Primary hydroxylation rate of terminal hydroxy groups after third polymerization step | | 82.0% | 85.5% | 83.7% | 83.2% | 87.3% | 93.4% | 91.1% | 94.7% |
| Degree of total unsaturation (meq/g) | | 0.008 | 0.012 | 0.011 | 0.010 | 0.007 | 0.011 | 0.006 | 0.010 |
| Hydroxy value (mgKOH/g) | | 24 | | | | 24 | | 24 | |

EP 2 565 215 B1

[Table 1 (continued)]

| | | Comp. Ex. 4 | Ex. 6 | Comp. Ex. 6 | Ex. 7 | Ex. 9 |
|---|---|---|---|---|---|---|
| | | | | Comparative polyol (3) | Polyol (A1-2) | Polyol (A1-4) |
| Average number of functional groups | | 3 | | 3 | | 4 |
| Primary hydroxylation rate of terminal hydroxy groups after first polymerization step | | 7.79% | 8.11% | 7.99% | 7.69% | 7.31% |
| PO addition amount in second polymerization step | Per 1 mol of functional groups in initiator | 0 | 1.00 mol | 0 | 1.00 mol | 1.00 mol |
| Primary hydroxylation rate of terminal hydroxy groups after second polymerization step | | - | 2.28% | - | 2.15% | 2.18% |
| EP addition amount in third polymerization step | Proportion in the total amount of polyol | 8 mass% | | 10 mass% | | 8 mass% |
| | Per 1 mol of Functional Groups in initiator | 4.2 mol | | 7.6 mol | | 5.5 mol |
| Primary hydroxylation rate of terminal hydroxy groups after third polymerization step | | 74.6% | 75.0% | 86.4% | 90.5% | 86.3% |
| Degree of total unsaturation (meq/g) | | 0.008 | 0.009 | 0.007 | 0.015 | 0.010 |
| Hydroxy value (mgKOH/g) | | 24 | | 16.6 | 16.2 | 18.5 |

As shown in this Table, in the case of Examples 1 to 7 where PO was added in the second polymerization step, the primary hydroxylation rate of the terminal hydroxy groups is improved as compared with Comparative Examples where no second polymerization step is carried out, even when the amount of EO added in the third polymerization step is the same. Further, by comparison of Examples 1 to 3, the primary hydroxylation rate of the terminal hydroxy groups changes depending upon the PO addition amount in the second polymerization step, and the larger the PO addition amount becomes in the second polymerization step, the higher the primary hydroxylation rate becomes.

As the materials other than the above, the following were used.

[Polymer-dispersed polyol]

POP (A1'-1): A polymer-dispersed polyol having a hydroxy value of 19.2 mgKOH/g and a polymer particle content of 20 mass%, and containing polymer particles obtained by copolymerizing acrylonitrile and styrene, in the polyol (A1-1) as the base polyol.

POP (A2'-1): A polymer-dispersed polyol having a hydroxy value of 21 mgKOH/g and a polymer particle content of 38 mass%, and containing polymer particles obtained by copolymerizing acrylonitrile and styrene, in a polyether polyol (a polyether polyol containing terminal oxyethylene groups, having an average number of functional groups of 3 and a hydroxy value of 34 mgKOH/g, obtained by subjecting PO to ring-opening addition polymerization to glycerol as an initiator and then subjecting EO to ring-opening addition polymerization), as the base polyol. The degree of total unsaturation of the base polyol is 0.060 meq/g, the primary hydroxylation rate of the terminal hydroxy groups is 85.1 %, and the terminal EO amount is 14.5 mass%.

[Polyisocyanate compound]

Polyisocyanate compound (1): A mixture comprising 80 mass% of TDI-80 (isomeric ratio: 80 mass% of 2,4-TDI and 20 mass% of 2,6-TDI) and 20 mass% of polymethylene polyphenyl polyisocyanate (common name: Polymeric MDI) (manufactured by NIPPON POLYURETHANE INDUSTRY CO., LTD.), tradename, CORONATE 1021).

Polyisocyanate compound (2): MDI modified polyisocyanate (NCO content is 29.1%, and the viscosity at 25°C is 79 mPa·s) (manufactured by NIPPON POLYURETHANE INDUSTRY CO., LTD., tradename: CORONATE 1120).

[Catalyst]

Amine type catalyst (1): A 33% dipropylene glycol (DPG) solution of triethylenediamine (manufactured by TOSOH CORPORATION, tradename: TEDA L33).

Amine type catalyst (2): A 70% DPG solution of bis(2-dimethylaminoethyl) ether (manufactured by TOSOH CORPORATION, tradename: TOYOCAT ET).

[Blowing agent]

Water.

[Crosslinking agent]

Crosslinking agent (1): A polyoxypropylene oxyethylene polyol having an average number of functional groups of 6 and a hydroxy value of 445 mgKOH/g, and containing 28 mass% of terminal oxyethylene groups.

Crosslinking agent (2): Diethanolamine

Crosslinking agent (3): A polyether polyol having a hydroxy value of 562 mgKOH/g, obtained by subjecting EO to ring-opening addition polymerization to pentaerythritol as an initiator in the presence of potassium hydroxide as a catalyst.

[Cell opener]

A polyether polyol having an average number of functional groups of 3 and a hydroxy value of 45.5 mgKOH/g, obtained by subjecting a mixture of EO and PO in a mass ratio of 80:20 to random ring-opening addition polymerization to glycerol as an initiator.

[Foam stabilizer]

A silicone type foam stabilizer (1): (Manufactured by Dow Corning Toray Co., Ltd., tradename: SZ-1325).

A silicone type foam stabilizer (2): (Manufactured by Dow Corning Toray Co., Ltd., tradename: SZ-1327).

[Examples 11 to 25 and Comparative Examples 11 to 14]

A flexible foam was produced in a blend ratio as identified in each of Tables 2 and 3. Examples in Table 2 are examples where the core density is decreased to be about 24 kg/m$^3$, and the thickness of the flexible foam (mold thickness) was adjusted to be 70 mm, on the other hand, examples in Table 3 are examples where the core density is controlled to be from about 45 to 59 kg/m$^3$, and the thickness of the flexible foam (mold thickness) was adjusted to be from 50 to 100 mm.

The unit in the blend amount in each of Tables 2 and 3 is represented by the isocyanate index with respect to the polyisocyanate compound, and represented by parts by mass with respect to the other components.

First, a polyoxyalkylene polyol, a polymer-dispersed polyol, a crosslinking agent, an amine type catalyst, a foam stabilizer, a blowing agent (water) and a cell opener as the case requires were mixed to prepare a polyol system solution. The polyol system solution was adjusted to a liquid temperature of 25±1°C. Separately, a polyisocyanate compound was adjusted to a liquid temperature of 25±1°C.

Then, to the polyol system solution, the polyisocyanate compound was added, followed by stirring by a high speed mixer (3,000 rpm/min) for 5 seconds to obtain a foam stock solution composition.

In a free foaming test, the above obtained foam stock solution composition was immediately injected into a wooden box having inner dimensions of 300 mm in length and width and 300 mm in height to carry out free foaming, and evaluation was carried out by the following method. The results are shown in Table 2.

In the evaluation test of physical properties of the flexible foam, the resulting foam stock solution composition was immediately injected into a mold heated at 65°C and closed, followed by curing at 65°C for 6 minutes, and then it was taken out from the mold to obtain a flexible foam. The resulting flexible foam was subjected to crushing and then left to stand in a room (temperature: 23°C, relative humidity: 50%) for 24 hours, and then the physical properties were measured. As the mold, a mold made of aluminium having inner dimensions of 400 mm in length and width, and 100 mm, 70 mm or 50 mm in height was used.

Here, crushing is a step of continuously compressing the flexible foam taken out from the mold, up to 75% to the thickness of the flexible foam.

The resulting flexible foam was evaluated by the following method. The results are shown in Tables 2 and 4.

<Evaluation method>

[Free foaming test]

Gel time: The time when mixing of a polyol system solution and a polyisocyanate compound was started, was regarded as 0 second, and in the process of gelation, a stick made of a thin glass or metal was lightly inserted into the upper portion of the reaction fluid during reaction, and the time when the reaction fluid got sticky when the stick was quickly pulled out was measured as a gel time (seconds).

Rise time: A time when mixing of a polyol system solution and a polyisocyanate compound was started, was regarded as 0 second, and the time until the mixed solution started to foam and the rise of the flexible foam terminated, was regarded as a rise time (seconds).

Settling rate: In the foaming step, a height from the bottom surface of the box to the surface of the flexible foam at the time when the rise of the flexible foam becomes maximum, is regarded as "maximum foam height", and a height of the flexible foam measured two minutes after the time when the height reaches the maximum foam height, is regarded as final foam height. The respective heights were measured, and the settling rate (unit: %) was calculated by the following formula. The smaller the rate become, the better the stability of the flexible foam becomes.

$$\text{Settling rate} = \{(\text{maximum foam height} - \text{final foam height}) / \text{maximum foam height}\} \times 100$$

[Evaluation test of physical properties of flexible foam]

With respect to the flexible polyurethane foam, the total density, the core density, the 25% hardness (25% ILD (indentation load deflection) hardness), 50% hardness (50% ILD hardness), 65% hardness (65% ILD hardness), the airflow of the core portion, the total rebound resilience, the rebound resilience of the core portion, tear strength, tensile strength, elongation, hysteresis loss, flammability test (represented as N.B. in a case where flame is distinguished before a first marked line), 50% compression set and 50% compression set under humid condition (durability under humid condition), were measured in accordance with JIS K6400 (1997 edition). The smaller the compression set and the compression set under humid condition (durability under humid condition) become, the better the durability becomes. Further, SAG-FACTOR as a ratio of the 65% hardness to the 25% hardness was determined. As the value becomes small, the bottom-hitting feeling is less likely to occur when the resulting flexible polyurethane foam is used as a seat cushion for automobiles.

The density of the core portion and the rebound resilience of the core portion were evaluated by using a sample at the center portion cut into a size of 100 mm in length and width, and 50 mm in height after removing a skin portion from the foam. The resonance frequency, the transmissibility at resonance frequency, the transmissibility at 6 Hz and the transmissibility at 10 Hz were measured at an amplitude 2a=5 mm by using a Tekken type platen as a pressing platen, by a method in accordance with JASO B407-82. Further, a pressure of 196 N was applied to a 314 cm$^2$ disk, and thereafter the stress relaxation rate (%) after 5 minutes and a creep rate (%) when a constant load of 196 N was applied for 60 minutes, were measured.

The curing property was evaluated in such a manner that curing was carried out for 6 minutes and a flexible foam was taken out from a mold, and one having no residues in the mold and having good shape of the flexible foam taken out was identified by ○ (good), one having no residues in the mold but having bad shape due to e.g. cracking at the corner was identified by Δ (a partly bad) and one having residues in the mold was identified by × (bad).

The moldability was evaluated based on the standards ○ (good): neither cell roughening nor void observed, and surface moldability being good, Δ (partly bad): cell roughening or void somewhat observed, and × (bad): a large cell roughening or void observed . The closed cell property was evaluated based on the standards × (bad): a flexible foam cracked at the time of crushing or defoamed after the crushing, ○ (good): a flexible foam having no deformation such as shrinkage after the crushing and having a good outer appearance.

[Table 2]

| | | | Ex. 11 | Comp. Ex. 11 | Comp. Ex. 12 |
|---|---|---|---|---|---|
| Blend ratio | Polyol [parts by mass] | Polyol (A1-1) | 60 | | |
| | | POP (A2'-1) | 40 | 40 | 40 |
| | | Comparative polyol (1) | | 60 | |
| | | Comparative polyol (2) | | | 60 |
| | Crosslinking agent (1) [parts by mass] | | 3 | 3 | 3 |
| | Amine type catalyst (1) [parts by mass] | | 0.65 | 0.65 | 0.65 |
| | Amine type catalyst (2) [parts by mass] | | 0.1 | 0.1 | 0.1 |
| | Silicone type foam stabilizer [parts by mass] | | 1.5 | 1.5 | 1.5 |
| | Blowing agent [parts by mass] | | 5.8 | 5.8 | 5.8 |
| | Polyisocyanate compound (1) [isocyanate index] | | 100 | 100 | 100 |
| Free foaming test | Mass of foam [g] | | 344 | 348 | 355 |
| | Gel time [sec] | | 42 | - | 51 |
| | Rise time [sec] | | 70 | - | 85 |
| | Settling rate [%] | | 2.3 | - | 3.8 |

(continued)

| Evaluation test of physical properties of foam | | | Ex. 11 | Comp. Ex. 11 | Comp. Ex. 12 |
|---|---|---|---|---|---|
| | Mold thickness [mm] | | 70 | 70 | 70 |
| | Density | Total [Kg/m$^3$] | 28.7 | | 28.6 |
| | | Core [Kg/m$^3$] | 24.2 | | 24.6 |
| | ILD hardness | 25% [N/314 cm$^2$] | 111 | | 96 |
| | | 50% [N/314 cm$^2$] | 232 | | 202 |
| | | 65% [N/314 cm$^2$] | 404 | | 352 |
| | Airflow of core portion [L/min] | | 55.3 | | 58.9 |
| | Rebound resilience | Total [%] | 47 | Measurement of physical properties is impossible | 47 |
| | | Core [%] | 58 | | 59 |
| | Tear strength [N/cm] | | 5.8 | | 5.8 |
| | Tensile strength [kPa] | | 139 | | 138 |
| | Elongation [%] | | 95 | | 96 |
| | 50% compression set [%] | | 7.8 | | 8.0 |
| | 50% compression set under humid condition [%] | | 28.2 | | 34.0 |
| | Flammability test [mm/min] | | N.B. | | N.B. |
| | Curing property | | ○ | - | Δ |
| | Molding property | | ○ | × | × |
| | Closed cell property | | ○ | × | × |

[Table 3]

| | | | Ex. 12 | Ex. 13 | Ex. 14 | Ex. 15 | Ex. 16 | Ex. 17 | Ex. 18 | Ex. 19 |
|---|---|---|---|---|---|---|---|---|---|---|
| Blend ratio | Polyol [parts by mass] | Polyol (A1-1) | 60 | 70 | | 60 | 35 | 70 | 70 | 35 |
| | | Polyol (A1-2) | | | | | 35 | | | 35 |
| | | Polyol (A1-3) | | | 60 | | | | | |
| | | Polyol (A1-4) | | | | | | | | |
| | | POP (A1'-1) | | | | 40 | | | | |
| | | POP (A2'-1) | 40 | 30 | 40 | | 30 | 30 | 30 | 30 |
| | | Comparative polyol (1) | | | | | | | | |
| | | Comparative polyol (2) | | | | | | | | |
| | | Comparative polyol (3) | | | | | | | | |
| | Crosslinking agent (1) [parts by mass] | | | | | 3.0 | | | | |
| | Crosslinking agent (2) [parts by mass] | | 1.0 | 1.0 | 1.0 | 1.0 | 1.0 | 1.0 | 1.0 | 1.0 |
| | Crosslinking agent (3) [parts by mass] | | 3.0 | 4.0 | 4.0 | 3.0 | 4.0 | 4.0 | 4.0 | 4.0 |
| | Cell opener [parts by mass] | | | 1.0 | 1.0 | 1.0 | 1.0 | 1.0 | 1.0 | 1.0 |
| | Amine type catalyst (1) [parts by mass] | | 0.45 | 0.45 | 0.45 | 0.45 | 0.45 | 0.45 | 0.45 | 0.45 |
| | Amine type catalyst (2) [parts by mass] | | 0.1 | 0.1 | 0.1 | 0.1 | 0.1 | 0.1 | 0.1 | 0.1 |
| | Silicone type foam stabilizer (1) [parts by mass] | | 0.6 | 0.3 | 0.3 | 0.3 | 0.3 | 0.3 | 0.3 | 0.3 |
| | Silicone type foam stabilizer (2) [parts by mass] | | 0.2 | 0.7 | 0.7 | 0.7 | 0.7 | 0.7 | 0.7 | 0.7 |
| | Blowing agent [parts by mass] | | 3.0 | 2.7 | 2.7 | 2.7 | 2.7 | 2.7 | 2.7 | 2.7 |
| | Polyisocyanate compound (1) [isocyanate index] | | 100 | 100 | 100 | 100 | 100 | 105 | 105 | 105 |
| | Polyisocyanate compound (2) [isocyanate index] | | | | | | | | | |
| Molding conditions | Mold thickness [mm] | | 100 | 100 | 100 | 100 | 100 | 70 | 50 | 50 |
| | Mass of foam [g] | | 752 | 943 | 946 | 950 | 952 | 698 | 540 | 545 |

EP 2 565 215 B1

[Table 3 (continued)]

| Blend ratio | | | Ex. 20 | Ex. 21 | Ex. 22 | Ex. 23 | Ex. 24 | Ex. 25 | Comp. Ex. 13 | Comp. Ex. 14 |
|---|---|---|---|---|---|---|---|---|---|---|
| | Polyol [parts by mass] | Polyol (A1-1) | 40 | 40 | 35 | 35 | | | | |
| | | Polyol (A1-2) | | | | | | | | |
| | | Polyol (A1-3) | | | | | | | | |
| | | Polyol (A1-4) | | | | | 70 | 70 | | |
| | | POP (A1'-1) | | | | | | | | |
| | | POP (A2'-1) | 25 | 25 | 15 | 15 | 30 | 30 | 40 | 40 |
| | | Comparative polyol (1) | | | | | | | 60 | |
| | | Comparative polyol (2) | | | | | | | | 60 |
| | | Comparative polyol (3) | 35 | 35 | 50 | 50 | | | | |
| | Crosslinking agent (1) [parts by mass] | | | | | | | | | |
| | Crosslinking agent (2) [parts by mass] | | 1.0 | 1.0 | | | 1.0 | 1.0 | 1.0 | 1.0 |
| | Crosslinking agent (3) [parts by mass] | | 3.0 | 3.0 | 1.5 | 1.5 | 3.0 | 3.0 | 3.0 | 3.0 |
| | Cell opener [parts by mass] | | | | 2.0 | 2.0 | | | | |
| | Amine type catalyst (1) [parts by mass] | | 0.45 | 0.45 | 0.45 | 0.45 | 0.45 | 0.45 | 0.45 | 0.45 |
| | Amine type catalyst (2) [parts by mass] | | 0.1 | 0.1 | 0.05 | 0.05 | 0.1 | 0.1 | 0.1 | 0.1 |
| | Silicone type foam stabilizer (1) [parts by mass] | | | | | | 0.3 | 0.3 | 0.6 | 0.6 |
| | Silicone type foam stabilizer (2) [parts by mass] | | 0.8 | 0.8 | 0.5 | 0.5 | 0.7 | 0.7 | 0.2 | 0.2 |
| | Blowing agent [parts by mass] | | 2.7 | 2.7 | 3.0 | 3.0 | 2.7 | 2.7 | 3.0 | 3.0 |
| | Polyisocyanate compound (1) [isocyanate index] | | 105 | 105 | | | 100 | 100 | 100 | 100 |
| | Polyisocyanate compound (2) [isocyanate index] | | | | 100 | 100 | | | | |
| Molding conditions | Mold thickness [mm] | | 100 | 50 | 100 | 50 | 100 | 50 | 100 | 100 |
| | Mass of foam [g] | | 975 | 555 | 940 | 535 | 940 | 545 | 745 | 755 |

[Table 4]

| | | | Ex. 12 | Ex. 13 | Ex. 14 | Ex. 15 | Ex. 16 | Ex. 17 | Ex. 18 | Ex. 19 |
|---|---|---|---|---|---|---|---|---|---|---|
| Evaluation test of physical properties of foam | Density | Total [Kg/m³] | 49.9 | 63.0 | 63.1 | 63.5 | 63.2 | 65.9 | 68.5 | 69.1 |
| | | Core [Kg/m³] | 45.1 | 58.5 | 58.6 | 58.9 | 57.9 | 58.6 | - | - |
| | ILD hardness | 25% [N/314 cm²] | 174 | 215 | 220 | 195 | 186 | 210 | 205 | 180 |
| | | 50% [N/314 cm²] | 320 | 380 | 399 | 365 | 299 | 360 | 355 | 274 |
| | | 65% [N/314 cm²] | 509 | 583 | 595 | 521 | 500 | 552 | 529 | 448 |
| | Sag-Factor | 65% ILD/25% ILD | 2.93 | 2.72 | 2.70 | 2.67 | 2.56 | 2.63 | 2.58 | 2.49 |
| | Airflow of core portion [L/min] | | 33.8 | 24.3 | 25.1 | 32.2 | 33.2 | 24.1 | - | - |
| | Rebound resilience | Total [%] | 63 | 66 | 66 | 68 | 68 | 65 | 63 | 66 |
| | | Core [%] | 68 | 70 | 71 | 73 | 74 | 70 | - | - |
| | Tear strength [N/cm] | | 5.4 | 6.4 | 5.9 | 5.2 | 5.8 | 6.4 | - | - |
| | Tensile strength [kPa] | | 136 | 155 | 142 | 132 | 145 | 164 | - | - |
| | Elongation [%] | | 101 | 100 | 100 | 101 | 108 | 100 | - | - |
| | 50% compression set [%] | | 2.4 | 2.3 | 2.5 | 2.0 | 1.5 | 2.6 | - | - |
| | 50% compression set under humid condition [%] | | 9.3 | 6.1 | 6.9 | 5.1 | 5.0 | 6.3 | - | - |
| | Resonance frequency [Hz] | | 3.58 | 3.30 | 3.34 | 3.25 | 3.22 | 3.46 | 3.58 | 3.55 |
| | Transmissibility at resonance frequency [A/A0] | | 3.71 | 3.44 | 3.78 | 3.12 | 3.15 | 3.35 | 3.08 | 2.80 |
| | Transmissibility at 6 Hz | | 0.60 | 0.50 | 0.49 | 0.52 | 0.50 | 0.55 | 0.65 | 0.62 |
| | Transmissibility at 10 Hz | | 0.15 | 0.13 | 0.14 | 0.13 | 0.13 | 0.15 | 0.17 | 0.17 |
| | Hysteresis loss [%] | | 16.9 | 15.4 | 15.9 | 14.2 | 13.1 | 14.5 | 15.1 | 15.6 |
| | Stress relaxation rate [%] | | 10.0 | 9.5 | 9.9 | 8.5 | 7.5 | 9.7 | 10.2 | 9.1 |
| | Creep rate [%] | | 3.5 | 2.3 | 2.5 | 2.0 | 1.6 | 2.7 | 3.3 | 2.8 |
| | Curing property | | O | O | O | O | O | O | O | O |
| | Molding property | | O | O | O | O | O | O | O | O |
| | Closed cell property | | O | O | O | O | O | O | O | O |

EP 2 565 215 B1

[Table 4 (continued)]

| | | | Ex. 20 | Ex. 21 | Ex. 22 | Ex. 23 | Ex. 24 | Ex. 25 | Comp. Ex. 13 | Comp. Ex. 14 |
|---|---|---|---|---|---|---|---|---|---|---|
| Evaluation test of physical properties of foam | Density | Total [Kg/m³] | 65.1 | 72.1 | 64.3 | 69.9 | 62.8 | 71.3 | 49.5 | 50.2 |
| | | Core [Kg/m³] | 60.2 | - | 59.1 | - | 57.8 | - | 45.0 | 46.2 |
| | ILD hardness | 25% [N/314 cm²] | 255 | 249 | 259 | 246 | 245 | 241 | 180 | 160 |
| | | 50% [N/314 cm²] | 410 | 377 | 473 | 435 | 461 | 425 | 335 | 301 |
| | | 65% [N/314 cm²] | 658 | 610 | 679 | 615 | 674 | 624 | 520 | 486 |
| | Sag-Factor | 65% ILD/25% ILD | 2.58 | 2.45 | 2.62 | 2.50 | 2.75 | 2.59 | 2.89 | 3.04 |
| | Airflow of core portion [L/min] | | 23.1 | - | 24.4 | - | 32.5 | - | 21.5 | 35.6 |
| | Rebound resilience | Total [%] | 71 | 69 | 66 | 64 | 72 | 69 | 62 | 63 |
| | | Core [%] | 73 | - | 69 | - | 73 | - | 67 | 66 |
| | Tear strength [N/cm] | | 5.4 | - | 5.3 | - | 5.9 | - | 5.2 | 5.1 |
| | Tensile strength [kPa] | | 143 | - | 155 | - | 141 | - | 120 | 119 |
| | Elongation [%] | | 110 | - | 95 | - | 106 | - | 91 | 98 |
| | 50% compression set [%] | | 2.2 | - | 2.4 | - | 2.1 | - | 2.9 | 3.7 |
| | 50% compression set under humid condition [%] | | 6.1 | - | 8.9 | - | 6.5 | - | 10.9 | 13.5 |
| | Resonance frequency [Hz] | | 3.15 | 3.48 | 3.40 | 3.60 | 3.21 | 3.52 | 3.60 | 3.80 |
| | Transmissibility at resonance frequency [A/A0] | | 3.22 | 2.99 | 3.31 | 3.05 | 3.32 | 2.95 | 3.55 | 3.45 |
| | Transmissibility at 6 Hz | | 0.49 | 0.63 | 0.58 | 0.69 | 0.49 | 0.65 | 0.65 | 0.80 |
| | Transmissibility at 10 Hz | | 0.12 | 0.16 | 0.15 | 0.17 | 0.13 | 0.16 | 0.17 | 0.20 |
| | Hysteresis loss [%] | | 12.1 | 14.4 | 16.5 | 17.4 | 13.4 | 14.9 | 17.1 | 19.1 |
| | Stress relaxation rate [%] | | 6.8 | 8.8 | 9.4 | 10.7 | 7.1 | 9.0 | 10.6 | 12.5 |
| | Creep rate [%] | | 1.4 | 2.6 | 2.8 | 3.6 | 1.9 | 2.7 | 3.6 | 4.0 |
| | Curing property | | O | O | O | O | O | O | O | O |
| | Molding property | | O | O | O | O | O | O | O | O |
| | Closed cell property | | O | O | O | O | O | O | O | O |

As shown in Table 1, the polyol (A1-1) used in Example 1 is a polyol produced by a process in which PO was added in the second polymerization step, and on the other hand, the comparative polyol (1) used in Comparative Example 11 is a polyol produced by a conventional process in which no second polymerization step is carried out. The EO addition amount is the same and the degree of total unsaturation is also almost the same in these Examples, but the primary hydroxylation rate of the terminal hydroxy groups is higher in the polyol (A1-1) used in Example 11.

As shown in the results of Table 4, in Examples 12 to 16, the curing property in production of a flexible polyurethane foam is good, and the tensile strength and the elongation are excellent as compared with Comparative Examples 13 and 14. The 50% compression set and the 50% compression set under humid condition are also improved, and therefore the durability is excellent. Further, the transmissibility at 6 Hz, the transmissibility at 10 Hz and hysteresis loss are also good.

As shown in results in Table 2, in Comparative Example 11 in which the comparative polyol (1) was used in production of a flexible polyol having a low density, the resin strength was weak, and the foam was broken during the foaming step, whereby it was impossible to carry out molding.

Further, Comparative Example 12 is an example in which the comparative polyol (2) obtained by subjecting PO and EO to ring-opening addition polymerization by using a KOH catalyst was used. The polyol (A1-1) used in Example 11 has a low content of oxyethylene groups, but has a high primary hydroxylation rate of the terminal hydroxy groups and also has a low degree of total unsaturation, as compared with the comparative polyol (2). In Example 11, the curing property, the molding property and the closed cell property are excellent, and from the viewpoint of the flexible foam physical properties, especially the hardness and the 50% compression set under humid condition are excellent, as compared with Comparative Example 12. Other physical properties are also good in Example 11 as compared with Comparative Example 12.

It is considered that the curing property was excellent in Example 11 since the reactivity was improved because of such high primary hydroxylation rate of the terminal hydroxy groups. Further, it is considered that the hardness and the wet heat durability were excellent in Example 11, since the EO addition amount was small, whereby a more uniform cell structure was formed.

Further, in Example 17, it was possible to obtain a flexible foam excellent in the hardness, the tensile strength and the elongation while achieving the thickness reduction. Other physical properties were also good and the curing property was also good. In Examples 18 and 19, it was possible to obtain a flexible foam having good hardness and good other physical properties, although the thickness is further reduced as compared with Example 17. The curing property was also good.

Examples 20 and 22 are examples in which the polyol (A1-1) and the comparative polyol (3) as a polyether polyol other than the polyol (A1) are combined. It was possible to obtain a foam having excellent hardness and wet heat durability, and achieving good vibration characteristics.

Example 24 is an example in which the polyol (A1-4) having an average number of functional groups of 4.0 was used, in which hardness, tear strength and wet heat durability were good.

Further, in Examples 18, 19, 21, 23 and 25, the thickness of the foam was 50 mm, and therefore the airflow of the core portion, the rebound resilience of the core portion, the tear strength, the tensile strength, the elongation, the 50% compression set and the 50% compression set under humid condition were not measured.

INDUSTRIAL APPLICABILITY

By using a polyoxyalkylene polyol and a polymer-dispersed polyol obtainable by the production process of the present invention, for producing a flexible polyurethane foam, it is possible to obtain a flexible foam having good strength, durability and curing property, which is suitable as a seat member for automobiles, capable of achieving weight saving by density reduction and/or thickness reduction.

**Claims**

1. A process for producing a polyoxyalkylene polyol, which comprises:

   a first polymerization step of subjecting propylene oxide or a mixture of propylene oxide and ethylene oxide to ring-opening addition polymerization to an initiator in the presence of a double metal cyanide complex catalyst (a1) to obtain a first intermediate polyol;
   a second polymerization step of subjecting, after the first polymerization step, propylene oxide to ring-opening addition polymerization in the presence of a polymerization catalyst (a2) made of an alkali metal hydroxide and/or an alkali metal alcoholate compound to obtain a second intermediate polyol; and
   a third polymerization step of subjecting, after the second polymerization step, ethylene oxide to ring-opening addition polymerization in the presence of a polymerization catalyst (a2) made of an alkali metal hydroxide or an alkali metal alcoholate compound to obtain a polyoxyalkylene polyol (A1).

2. The process for producing a polyoxyalkylene polyol according to Claim 1, wherein the content of oxyethylene groups in the polyoxyalkylene polyol (A1) is from 5 to 25 mass%.

3. The process for producing a polyoxyalkylene polyol according to Claim 1 or 2, wherein the addition amount of propylene oxide in the second polymerization step is from 0.28 to 3.00 mol per 1 mol of functional groups of the initiator.

4. The process for producing a polyoxyalkylene polyol according to any one of Claims 1 to 3, wherein, after the second polymerization step, the proportion of primary hydroxy groups among the terminal hydroxy groups is at most 4%.

5. The process for producing a polyoxyalkylene polyol according to any one of Claims 1 to 4, wherein the degree of total unsaturation of the polyoxyalkylene polyol (A1) is at most 0.05 meq/g.

6. The process for producing a polyoxyalkylene polyol according to any one of Claims 1 to 5, wherein the average number of functional groups of the initiator is from 2 to 6, and the polymerizations are carried out so that the hydroxy value of the polyoxyalkylene polyol (A1) is from 5 to 56 mgKOH/g.

7. A polyoxyalkylene polyol (A1) obtainable by the production process as defined in any one of Claims 1 to 6.

8. A process for producing a polymer-dispersed polyol (A1'), which comprises a fourth step of polymerizing a monomer having an ethylenically unsaturated double bond in the polyoxyalkylene polyol (A1) as defined in Claim 7, as a base polyol.

9. A polymer-dispersed polyol (A1') obtainable by the production process as defined in Claim 8.

10. A process for producing a flexible polyurethane foam, which comprises a foaming step of reacting a polyol (A) with a polyisocyanate compound (B), in the presence of a catalyst (C), a blowing agent (D) and a foam stabilizer (E), wherein the polyol (A) contains the polyoxyalkylene polyol (A1) as defined in Claim 7 and/or the polymer-dispersed polyol (A1') as defined in Claim 9, in an amount of from 10 to 100 mass% per 100 mass% of the polyol (A).

11. The process for producing a flexible polyurethane foam according to Claim 10, wherein the polyol (A) contains a polymer-dispersed polyol (A2) other than the polymer-dispersed polyol (A1'), in an amount of from 10 to 90 mass% per 100 mass% of the polyol (A).

12. The process for producing a flexible polyurethane foam according to Claim 10 or 11, wherein the blowing agent (D) is water only.

13. The process for producing a flexible polyurethane foam according to any one of Claims 10 to 12, wherein a crosslinking agent (F) is further present in the foaming step.

14. A flexible polyurethane foam obtainable by the production process as defined in any one of Claims 10 to 13, which has a core density of from 20 to 100 kg/m$^3$.

15. A seat member for automobiles, using the flexible polyurethane foam as defined in Claim 14.

**Patentansprüche**

1. Verfahren zur Herstellung eines Polyoxyalkylenpolyols, umfassend:

einen ersten Polymerisationsschritt, bei dem Propylenoxid oder eine Mischung aus Propylenoxid und Ethylenoxid einer Ringöffnungs-Additionspolymerisation an einen Initiator in Gegenwart eines Doppelmetall-Cyanidkomplexkatalysators (a1) unterzogen wird, um ein erstes intermediäres Polyol zu erhalten;
einen zweiten Polymerisationsschritt, bei dem nach dem ersten Polymerisationsschritt Propylenoxid in Gegenwart eines Polymerisationskatalysators (a2), der aus einem Alkalimetallhydroxid und/oder einem Alkalimetallalkoholat hergestellt ist, einer Ringöffnungs-Additionspolymerisation unterzogen wird, um ein zweites intermediäres Polyol zu erhalten; und

einen dritten Polymerisationsschritt, bei dem nach dem zweiten Polymerisationsschritt Ethylenoxid einer Ringöffnungs-Additionspolymerisation in Gegenwart eines Polymerisationskatalysators (a2), der aus einem Alkalimetallhydroxid oder einem Alkalimetallalkoholat hergestellt ist, unterzogen wird, um ein Polyoxyalkylenpolyol (A1) zu erhalten.

2. Das Verfahren zur Herstellung eines Polyoxyalkylenpolyols gemäß Anspruch 1, worin der Gehalt an Oxyethylengruppen in dem Polyoxyalkylenpolyol (A1) von 5 bis 25 Gewichts-% beträgt.

3. Das Verfahren zur Herstellung eines Polyoxyalkylenpolyols gemäß Anspruch 1 oder 2, worin die zugegebene Menge an Propylenoxid im zweiten Polymerisationsschritt von 0,28 bis 3,00 Mol pro 1 Mol funktionellen Gruppen des Initiators beträgt.

4. Das Verfahren zur Herstellung eines Polyoxyalkylenpolyols gemäß einem der Ansprüche 1 bis 3, worin nach dem zweiten Polymerisationsschritt der Anteil an primären Hydroxygruppen unter den terminalen Hydroxygruppen höchstens 4 % beträgt.

5. Das Verfahren zur Herstellung eines Polyoxyalkylenpolyols gemäß einem der Ansprüche 1 bis 4, worin der Grad an gesamter Ungesättigtheit des Polyoxyalkylenpolyols (A1) höchstens 0,5 meq/g beträgt.

6. Das Verfahren zur Herstellung eines Polyoxyalkylenpolyols gemäß einem der Ansprüche 1 bis 5, worin die durchschnittliche Anzahl an funktionellen Gruppen des Initiators von 2 bis 6 beträgt und die Polymerisationen so ausgeführt werden, dass die Hydroxylzahl des Polyoxyalkylenpolyols (A1) von 5 bis 56 mgKOH/g beträgt.

7. Polyoxyalkylenpolyol (A1) erhältlich mittels des Herstellungsverfahrens wie in einem der Ansprüche 1 bis 6 definiert.

8. Verfahren zur Herstellung eines Polymer-dispergierten Polyols (A1'), umfassend einen vierten Schritt, bei dem ein Monomer mit ethylenisch ungesättiger Doppelbindung in dem Polyoxyalkylenpolyol (A1) wie in Anspruch 7 definiert als Grundpolyol polymerisiert wird.

9. Polymer-dispergierter Polyol (A1') erhältlich anhand des Herstellungsverfahrens wie in Anspruch 8 definiert.

10. Verfahren zur Herstellung eines flexiblen Polyurethanschaums, umfassend einen Schäumungsschritt, bei dem ein Polyol (A) mit einer Polyisocyanatverbindung (B) in Gegenwart eines Katalysators (C), eines Treibmittels (D) und eines Schaumstabilisators (E) umgesetzt wird, worin der Polyol (A) den Polyoxyalkylenpolyol (A1) wie in Anspruch 7 definiert und/oder den Polymer-dispergierten Polyol (A1') wie in Anspruch 9 definiert in einer Menge von 10 bis 100 Gewichts-% pro 100 Gewichts-% des Polyols (A) enthält.

11. Verfahren zur Herstellung eines flexiblen Polyurethanschaums gemäß Anspruch 10, worin der Polyol (A) einen anderen Polymer-dispergierten Polyol (A2) als den Polymer-dispergierten Polyol (A1') in einerr Menge von 10 bis 90 Gewichts-% auf 100 Gewichts-% des Polyols (A) enthält.

12. Das Verfahren zur Herstellung eines flexiblen Polyurethanschaums gemäß Anspruch 10 oder 11, worin das Treibmittel (D) ausschließlich Wasser ist.

13. Das Verfahren zur Herstellung eines flexiblen Polyurethanschaums gemäß einem der Ansprüche 10 bis 12, worin ein Vernetzungsmittel (F) ferner in dem Schäumungsschritt anwesend ist.

14. Flexibler Polyurethanschaum erhältlich gemäß des Herstellungsverfahrens wie in einem der Ansprüche 10 bis 13 definiert, der eine Kerndichte von 20 bis 100 kg/m$^3$ aufweist.

15. Sitzteil für Automobile unter Verwendung des flexiblen Polyurethanschaums wie in Anspruch 14 definiert.

**Revendications**

1. Procédé pour produire un polyoxyalkylène-polyol, qui comprend :

une première étape de polymérisation consistant à soumettre de l'oxyde de propylène ou un mélange d'oxyde de propylène et d'oxyde d'éthylène à une polymérisation par addition par ouverture de cycle avec un amorceur en présence d'un catalyseur complexe de cyanure métallique double (a1) pour former un premier polyol intermédiaire ;

une deuxième étape de polymérisation consistant à soumettre, après la première étape de polymérisation, de l'oxyde de propylène à une polymérisation par addition par ouverture de cycle en présence d'un catalyseur de polymérisation (a2) fait d'un hydroxyde de métal alcalin et/ou d'un alkylate de métal alcalin pour former un deuxième polyol intermédiaire ; et

une troisième étape de polymérisation consistant à soumettre, après la deuxième étape de polymérisation, de l'oxyde d'éthylène à une polymérisation par addition par ouverture de cycle en présence d'un catalyseur de polymérisation (a2) fait d'un hydroxyde de métal alcalin et/ou d'un alkylate de métal alcalin pour former un polyoxyalkylène-polyol (A1).

2.	Procédé pour produire un polyoxyalkylène-polyol selon la revendication 1, dans lequel la teneur en groupes oxyéthylène du polyoxyalkylène-polyol (A1) est de 5 à 25 % en masse.

3.	Procédé pour produire un polyoxyalkylène-polyol selon la revendication 1 ou 2, dans lequel la quantité d'addition d'oxyde de propylène dans la deuxième étape de polymérisation est de 0,28 à 3,00 moles par mole de groupes fonctionnels de l'amorceur.

4.	Procédé pour produire un polyoxyalkylène-polyol selon l'une quelconque des revendications 1 à 3, dans lequel, après la deuxième étape de polymérisation, la proportion de groupes hydroxy primaires parmi les groupes hydroxy terminaux est d'au plus 4 %.

5.	Procédé pour produire un polyoxyalkylène-polyol selon l'une quelconque des revendications 1 à 4, dans lequel le degré d'insaturation totale du polyoxyalkylène-polyol (A1) est d'au plus 0,05 méq/g.

6.	Procédé pour produire un polyoxyalkylène-polyol selon l'une quelconque des revendications 1 à 5, dans lequel le nombre moyen de groupes fonctionnels de l'amorceur est de 2 à 6, et les polymérisations sont mises en oeuvre de sorte que l'indice d'hydroxyle du polyoxyalkylène-polyol (A1) soit de 5 à 56 mg KOH/g.

7.	Polyoxyalkylène-polyol (A1) pouvant être obtenu par le procédé de production tel que défini dans l'une quelconque des revendications 1 à 6.

8.	Procédé pour produire un polyol dispersé dans un polymère (A1'), qui comprend une quatrième étape consistant à polymériser un monomère présentant une double liaison à insaturation éthylénique dans le polyoxyalkylène-polyol (A1) tel que défini dans la revendication 7, en tant que polyol de base.

9.	Polyol dispersé dans un polymère (A1') pouvant être obtenu par le procédé de production tel que défini dans la revendication 8.

10.	Procédé pour produire une mousse de polyuréthane flexible, qui comprend une étape de formation de mousse consistant à faire réagir un polyol (A) avec un composé polyisocyanate (B), en présence d'un catalyseur (C), d'un agent d'expansion (D), et d'un stabilisateur de mousse (E), le polyol (A) contenant le polyoxyalkylène-polyol (A1) tel que défini dans la revendication 7 et/ou le polyol dispersé dans un polymère (A1') tel que défini dans la revendication 9, en une quantité de 10 à 100 % en masse pour 100 % en masse du polyol (A).

11.	Procédé pour produire une mousse de polyuréthane flexible selon la revendication 10, dans lequel le polyol (A) contient un polyol dispersé dans un polymère (A2) autre que le polyol dispersé dans un polymère (A1'), en une quantité de 10 à 90 % en masse pour 100 % en masse du polyol (A).

12.	Procédé pour produire une mousse de polyuréthane flexible selon la revendication 10 ou 11, dans lequel l'agent d'expansion (D) est de l'eau uniquement.

13.	Procédé pour produire une mousse de polyuréthane flexible selon l'une quelconque des revendications 10 à 12, dans lequel un agent de réticulation (F) est en outre présent dans l'étape de formation de mousse.

14.	Mousse de polyuréthane flexible pouvant être obtenue par le procédé de production tel que défini dans l'une quelconque des revendications 10 à 13, qui présente une masse volumique de coeur de 20 à 100 kg/m$^3$.

15. Elément de siège pour automobiles utilisant la mousse de polyuréthane flexible telle que définie dans la revendication 14.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2616054 B
- JP 2616055 B
- JP 11106500 A
- JP 2000230027 A
- JP 4273876 B
- JP 4300920 A
- JP 2003165836 A
- JP 2005015786 A
- JP 7196778 A
- JP 2000513647 A